(19) **Europäisches Patentamt**
**European Patent Office**
**Office européen des brevets**

(11) **EP 2 804 343 B1**

(12) **EUROPEAN PATENT SPECIFICATION**

(45) Date of publication and mention
of the grant of the patent:
**18.05.2016 Bulletin 2016/20**

(51) Int Cl.:
*H04L 12/24* *(2006.01)*   *H04L 12/46* *(2006.01)*

(21) Application number: **13168075.3**

(22) Date of filing: **16.05.2013**

(54) **Method for mapping a network topology request to a physical network, computer program product, mobile communication system, and network configuration platform**

Verfahren zum Abbilden einer Netzwerktopologieanfrage auf ein physikalisches Netzwerk, Computerprogrammprodukt, Mobilkommunikationssystem und Netzwerkkonfigurationsplattform

Procédé de mappage d'une demande de topologie de réseau sur un réseau physique, produit de programme informatique, système de communication mobile et plate-forme de configuration de réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.11.2014 Bulletin 2014/47**

(73) Proprietor: **NTT DoCoMo, Inc.**
**Chiyoda-ku**
**Tokyo 100-6150 (JP)**

(72) Inventors:
• **An-De Luca, Xueli**
 **80798 München (DE)**
• **Khan, Ashiq**
 **81669 München (DE)**
• **Herker, Sandra**
 **80333 München (DE)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
• **YE ZHOU ET AL: "A virtual network embedding scheme with two-stage node mapping based on physical resource migration", COMMUNICATION SYSTEMS (ICCS), 2010 IEEE INTERNATIONAL CONFERENCE ON, IEEE, PISCATAWAY, NJ, USA, 17 November 2010 (2010-11-17), pages 761-766, XP031848405, ISBN: 978-1-4244-7004-4**
• **WU-HSIAO HSU ET AL: "Virtual Network Mapping through Path Splitting and Migration", ADVANCED INFORMATION NETWORKING AND APPLICATIONS WORKSHOPS (WAINA), 2012 26TH INTERNATIONAL CONFERENCE ON, IEEE, 26 March 2012 (2012-03-26), pages 1095-1100, XP032169917, DOI: 10.1109/WAINA.2012.74 ISBN: 978-1-4673-0867-0**

# Description

The present invention relates to the field of communication networks, more specifically to approaches for mapping a network topology request to a physical network, for example a physical network of a wired or wireless communication system.

In the field of communication networks virtual network operators are known. A virtual network operator may provide individual network solutions without the need of owning any network infrastructure. The virtual network operator arranges the individual network solution on the basis of the infrastructure and the technology of one or more telecommunication service providers. Virtual network operators are called "virtual" as they only offer network services without owing the physical data lines. Virtual network operators are active both in the field of wired communication networks and the field of wireless communication networks.

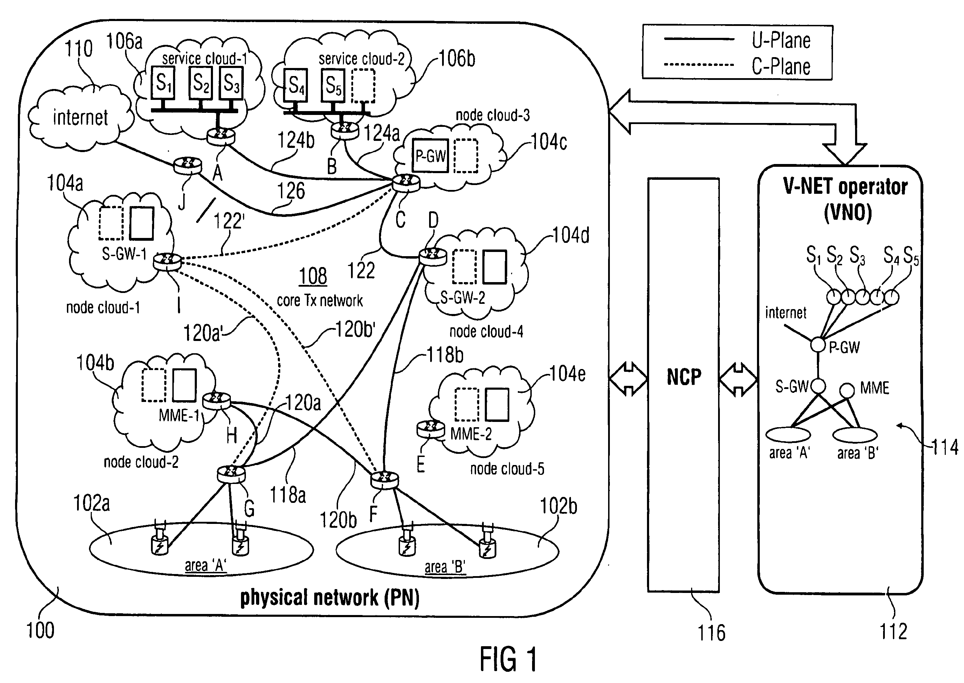

Fig. 1 shows an exemplary representation of how a virtual network operator provides its desired network topology that needs to be mapped to a physical network. Fig. 1 shows the physical network 100, in the depicted example a mobile communication network, including two radio access areas 102a and 102b (areas A and B) including one or more base stations BS serving one or more mobile users. The physical network 100 further comprises a plurality of node clouds 104a to 104e for implementing operations and management services. More specifically, each node cloud 104a to 104b provides one or more resources as shown by the boxes in the respective representations of the node clouds allowing for the implementation of desired operations and management services. For example, node clouds 104a and 104d may implement serving gateways S-GW-1 and S-GW-2 for the mobile communication network implemented by the physical network 100. Node clouds 104b and 104e may implement mobility management entities MME-1 and MME-2, while node cloud 104c may implement the packet data network gateway P-GW. The physical network 100 may further comprise one or more services clouds, two of which are shown at 106a and 106b in Fig. 1. The services clouds 106a and 106b, like the node clouds 104a to 104e, provide resources, as schematically depicted by the boxes, for providing specific services. The network 100 further comprises a core transport network 108 including a plurality of interfaces A to J for providing a connection to the respective node clouds, services clouds and areas. More specifically, interfaces A and B provide for a connection to the service clouds 106a to 106b, interfaces C, D and E provide for a communication to the node clouds 104c, 104d and 104e, interfaces F and J provide for a communication to the radio access areas 102a, 102b and interfaces H and I provide for a connection to the node clouds 104a and 104b. Further, by means of the interface J connection to the internet 110 is possible.

The physical network shown in Fig. 1 may be provided by a telecommunication provider and may be used by a virtual network operator 112 for implementing a specific topology desired by the virtual network operator for providing specific services to his customers. The virtual network operator 112 provides a network topology request as is schematically represented in Fig. 1 at 114. A network topology represents the respective services and operations to be provided by the virtual network operator to his customers. The virtual network operator desires to provide two radio access areas A and B both connected to a service gateway S-GW and to a mobile management entity MME. The virtual network represented by the topology 114 further includes a packet data network gateway P-GW connected to the service gateway S-GW. The packet data network gateway P-GW is further connected to the internet. In addition, five different services $S_1$ to $S_5$ are to be provided as is depicted schematically in Fig. 1. The virtual network operator generates a network topology request including the network topology 114 as depicted in Fig. 1 which, in addition, may include a link bandwidth BW, a delay and a node/site capability or resource requirement, for example the number of nodes or the number of CPU cores that are needed for implementing the desired services to be provided by the virtual network operator via its virtual net. As is depicted in Fig. 1, a network configuration platform 116 is provided which receives the network topology request from the virtual network operator 112. The network configuration platform 116 has information about the physical network 100 and knows what it looks like. The network configuration platform 116 will map the VNO network topology request onto the PN 100 in a way as depicted in Fig. 1. More specifically, the areas A and B of the network topology 114 are implemented by the radio access areas 102a and 102b. The service gateway S-GW is implemented by node cloud 104d including the necessary resources, thereby providing service gateway S-GW-2. The mobile management entity MME of the network topology network 114 is implemented by the node cloud 114b by the resources implementing MME-1. The packet data network gateway P-GW of the network topology 114 is implemented by the node cloud 104c, and the services $S_1$ to $S_5$ are implemented by the service clouds 106a and 106b, of which service cloud 106a implements services $S_1$ to $S_3$ and services cloud 106b implements services $S_4$ to $S_5$. By means of the core network 108 the necessary connections among the respective elements of the physical network are implemented, more specifically the areas A and B are connected to the service gateway via communication paths 118a and 118b. Further, the areas A and B are connected to the mobile management entity via communication paths 120a and 120b. The service gateway S-GW of the network topology 114 implemented by node cloud 104a is connected to the packet data network gateway P-GW implemented by node 104c via the communication path 122. The packet gateway is connected to the respective service clouds 106a and 106b via the communication paths 124a and 124b, and by means of the communication path 126 to the internet 110.

As has been explained above, telecommunication providers, by means of the approach as described with regard to Fig. 1, tend to decouple their services from dedicated hardware and deploy the services using the above described virtualization technology, preferably on the basis of low cost commodity hardware. However, a drawback with this approach is that the commodity hardware, for example the commodity IT hardware, may not be in a position to provide carrier-grade reliability to run high requirement services. In conventional approaches, to address this problem, the reliability is provisioned by grading one-to-one backup sites to protect a service from failure. Reliability in this context is defined as the percentage of service uptime within a certain period of time, for example, five-nine reliability means around five minutes failure time within a year. However, applying the just mentioned conventional approach of providing one-to-one backup sites may not be sufficient to provision reliability for virtualized telecommunication services, like 3GPP core nodes (MME, SGW, PGW, or the like) without explicit reliability guarantee, for example a four-nine, five-nine or the like reliability. As mentioned above, reliability refers to the percentage of uptime during a certain time period, for example 99.999% up time within a year.

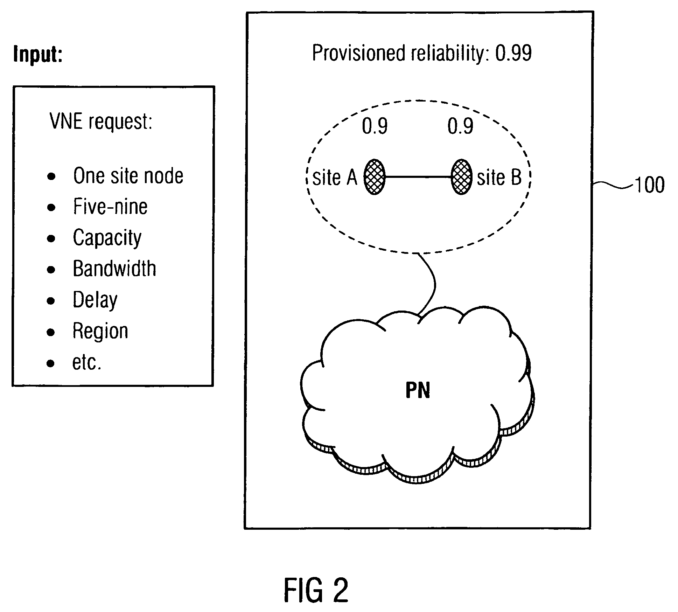

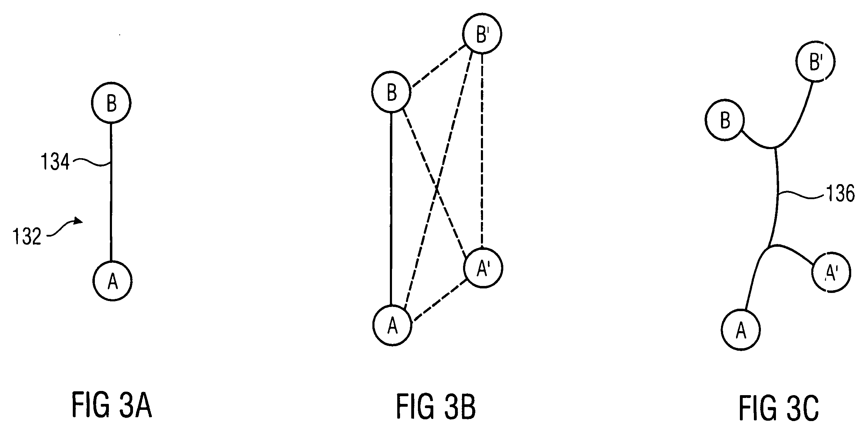

Fig. 2 illustrates the above mentioned conventional creation of one-to-one backup sites on the basis of a simplified physical network 100. The physical network, by means of the network configuration platform (NCP) 116 (see Fig. 1) is configured on the basis of the virtual network embedding (VNE)request including information defining a one site node, a capacity, a bandwidth, a delay and region and the like. In addition, the reliability, in the example a five-nine reliability is defined. Applying these input parameters to the NCP yields a physical network configuration as shown in Fig. 1 where the requested node is realized by a first site A and by a second site B (which is used as the backup of site A) both connected to the core transport (TX) network 108 and each having a reliability of 0.9. However, the combination of site A and B provides a reliability of 0.99, which will not yield the requested reliability of nine-five by a virtual network operator (VNO). Known examples for providing the above mentioned site protection will be described in the following with regard to Fig. 3.

Fig. 3 shows a simplified example for obtaining full protection for a VNE request including only two nodes in accordance with known approaches. Fig. 3(a) shows a simplified VNE request, Fig. 3(b) shows a full protection when applying a first known approach, and Fig. 3(c) shows full protection when applying a second known approach.

In Fig. 3(a) a VNE request graph 132 of a VNE request is depicted. In the shown example, the VNE request includes a first node or site A and a second node or site B which are connected by a transmission link 134 having the requirements (e.g. bandwidth, delay) as defined in the VNE request. When it is desired to provide for a full protection of the VNE request 132 including the two nodes A and B with the link 134 therebetween, and when applying a conventional one to one protection technique , in the physical network, 2+2 = 4 nodes are searched (two primary nodes A, B and two backup nodes A', B') and for six links to realize a 1+1 node/site protection, as it is depicted in Fig. 3(b). Such an approach is suggested by Hongfang Yu et al. in "Survivable Virtual Infrastructure Mapping in Federated and Networking System under Single Regional Failure," Globecom 2010, and "Cost Efficient Design of Survivable Virtual Infrastructure to Recover from Facility Node Failures," ICC 2011. A further approach is described by Wai-Leong Yeow et al., "Designing and Embedding Reliable Virtual Infrastructures," Computer Communications Review, vol. 41-2, 2011.

In another approach depicted in Fig. 3(c) nodes providing for the necessary requirements for implementing virtual network nodes A and B are selected from the physical nodes of the physical network (see for example Fig. 1). Among these nodes those fulfilling a predefined parameter, e.g. an acceptable delay for a communication between the primary node and the backup node, are selected. These nodes are than connected by a path determined, e.g., by applying a constraint-based shortest path first approach (the constraint maybe the bandwidth value that is given by the VNE request and associated with the link 134).

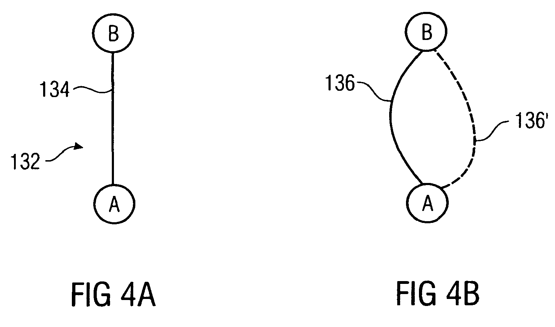

Besides the above mentioned one-to-one site protection also approaches are known in the art allowing for a one-to-one path protection. Fig. 4 shows a simplified example for obtaining a one-to-one path protection for a VNE request including only two nodes in accordance with known approaches. Fig. 4(a) shows a simplified VNE request corresponding to the one of Fig. 3(a), and Fig. 4(b) shows a conventional approach for obtaining a one-to-one path protection by proactively or reactively providing a joint or a disjoint path for recovering path failures. The conventional approach depicted in Fig. 4(b) illustrates a first path 136 between nodes A and B and also a backup path 136' between nodes A and B which may be reactively or proactively provided. Such an approach is described, for example, by T. Guo et al., "Shared backup network provision for virtual network embedding," in IEEE ICC, 2011 or by H. Yu et al., "Migration based protection for virtual infrastructure survivability for link failure," in OFC/NFOEC 2011.

The problem with the above described known approaches for providing path protection and site protection is that path protection and site protection are always considered separately and that there is no single solution to support both path and site protection and, in addition, the explicit reliability requirements are also not taken into consideration. There is no solution guaranteeing a sufficient reliability when implementing a service on low cost commodity hardware using a virtualization technology as known solutions do not support reliability requirements and do not support node and link protection at the same time.

It is an object of the present invention to provide an improved approach of mapping virtual network embedding requests from a virtual network operator onto a physical network such that preset reliability requirements both for site protection and link protection are achieved at the time of mapping the request.

This object is achieved by a method of claim 1, a computer program product of claim 13, a mobile communication system of claim 14, and a network configuration platform of claim 15.

The present invention provides a method for mapping a virtual network request to a physical network, the virtual network request including a plurality of VNO nodes and a plurality of VNO links, the method comprising:

> (a) for each of a plurality of VNO nodes included in the virtual network request:
>
>> (a.1) determining a site cluster including a plurality of sites in the physical network that meet a VNO node resource requirement associated with the VNO node to be mapped, and
>>
>> (a.2) selecting one or more migration paths in the physical network that meet a backup link requirement for a link between the sites of the site cluster; and
>
> (b) for each of a plurality of VNO links between respective VNO nodes included in the network topology request:
>
>> (b.1) determining a plurality of paths in the physical network that meet a VNO link requirement for a path between two site clusters, and
>>
>> (b.2) selecting from the paths determined in step (b.1) a primary path and at least one backup path for linking two site clusters.

In accordance with embodiments, step (a.1) comprises determining, on the basis of a VNO node reliability requirement, a number of required sites in the site cluster to map the VNO node, and selecting one of the sites in the site cluster as primary site and the other nodes as backup sites.

In accordance with embodiments, the primary site is selected randomly from one of the sites of the site cluster, or is the site having the highest reliability, or is the site having the highest capacity, in case two or more sites have the same reliability.

In accordance with embodiments, determining the number of required sites in the site cluster comprises sorting a plurality of sites in the physical network according to the site reliabilities in decreasing order, and selecting one or more candidate sites from the plurality of sites, wherein the combination of the one or more candidate sites provides for a reliability equal or higher than a requested VNO node reliability requirement, and wherein all selected candidate sites form the site cluster for mapping the VNO node.

In accordance with embodiments, the network topology request specifies a VNO link reliability requirement for the VNO links connected to the VNO node corresponding to the primary site in the site cluster, and step (a.2) comprises determining a path reliability for each migration path, and in case the path reliability for a migration path does not fulfil the highest VNO link reliability requirement, determining a migration backup path for the migration path.

In accordance with embodiments, step (a) comprises determining a number of candidate sites in the physical network on the basis of which steps (a.1) and (a.2) are performed, and determining the candidate sites comprises filtering the sites in the physical network according to one or more predefined constraints.

In accordance with embodiments, the predefined constraints comprise one or more of a site geographical constraint, a site capacity constraint, an access router link reliability constraint, an access link bandwidth constraint and a site reliability constraint.

In accordance with embodiments, step (b) comprises applying a constrained shortest path first (CSPF) algorithm on a plurality of paths in the physical network, and, in case the returned shortest path satisfies the VNO link requirement, selecting the returned shortest path as the primary path.

In accordance with embodiments, the method comprises determining whether the primary path fulfils a VNO link reliability requirement, and, in case the primary path does not fulfil the VNO link reliability requirement, selecting a backup path such that the backup path together with the primary path satisfies the VNO link reliability requirement.

In accordance with embodiments, selecting a backup path comprises selecting one or more backup paths each satisfying together with the primary path the VNO link reliability requirement, and selecting from the combinations of the backup path and the primary path having a sufficient reliability the combination with the least bandwidth consumption.

In accordance with embodiments, the backup link requirement includes a first parameter indicative of a predefined distance between the VNO node and its backup node, and a second parameter indicative of a predefined constraint of the link between the VNO node and its backup node, and the VNO node link requirement includes a first parameter indicative of a distance between the VNO node, and a second parameter indicative of a predefined constraint of the VNO link between the VNO node.

In accordance with embodiments, the first parameter comprises a delay for transmitting a signal, and the second parameter comprises a bandwidth.

In accordance with embodiments, the method comprises receiving the network topology request, and generating a VNO node embedding sequence list and a VNO link embedding sequence list, and steps (a) and (b) are performed on the basis of the VNO node embedding sequence list and the VNO link embedding sequence list.

In accordance with embodiments, generating the VNO node embedding sequence list comprises, in case the network topology request includes VNO node reliability requirements, sorting the VNO nodes according to the required reliability in decreasing order, sorting the VNO nodes with the same reliability according to the required capacities, and sorting the VNO nodes with the same capacity according to the number of incident links attached to the VNO nodes, and, in case the network topology request does not include VNO node reliability requirements, sorting the VNO nodes according to the required capacities, and sorting the VNO nodes with the same capacity according to the number of incident links attached to the VNO nodes.

In accordance with embodiments, generating the VNO link embedding sequence list comprises, in case the network topology request includes link reliability requirements, assigning to each VNO node a weighting factor according to the maximum required incident link reliability of a VNO node, in case the network topology request does not include link reliability requirements, using the number of incident links of a VNO node as the weighting factor, and sorting the VNO nodes according to the weighting factor in decreasing order, and sorting the VNO links such that (i) incident links of a VNO node with a higher weighting factor will be embedded first, (ii) in case two VNO nodes have the same weighting factor, the VNO node requiring a higher bandwidth will be embedded first, and (iii) incident links attached to the same VNO node are embedded in accordance with an embedding sequence decided by the required bandwidth in decreasing order.

In accordance with embodiments, the method further comprises configuring the physical network in accordance with the selected sites and paths.

In accordance with embodiments, the network topology request specifies a communication network.

In accordance with embodiments, the communication network comprises a mobile communication network including one or more radio access areas and one or more nodes connected by a core network, the one or more nodes including a packet data network gateway, a serving gateway, a mobile management entity node or a service node.

The present invention provides a computer program product including instructions stored on a computer readable medium which, when running on a computer, executes the method in accordance with embodiments of the invention.

The present invention provides a mobile communication system, comprising a physical network, and a network configuration platform coupled to the physical network and configured to receive a network topology request and to map the network topology request to the physical network in accordance with the method of embodiments of the invention.

The present invention provides a network configuration platform for a mobile communication system including a physical network, wherein the network configuration platform is configured to be coupled to the physical network and to receive a network topology request, and wherein the network configuration platform is configured to map the network topology request to the physical network in accordance with the method of embodiments of the invention.

In accordance with embodiments of the invention, virtual network embedding requests from a virtual network operator are mapped onto a physical network such that preset reliability requirements both for site protection and link protection are achieved at the same time, that is at the time of mapping the request. This allows, for example, running services like telecommunication services, which have high reliability requirements, on low cost commodity hardware. In accordance with embodiments, a resource management unit is provided in the network configuration platform which receives the VNE request and takes the necessary measures for mapping the virtual network to the physical network via respective network and cloud interfaces. In accordance with embodiments, a VNE algorithm is provided that may be implemented in the resource management module of the NCP. The VNE algorithm generates a mapping solution on the basis of the VNE request, primary and backup sites as well as primary and backup paths are determined for embedding.

Thus, embodiments of the invention overcome the above described deficiencies of prior art approaches for embedding virtual networks. In accordance with an embodiment, the resource placement and network setup solution is determined based on a current physical network (PN) information and the virtual network embedding (VNE) request with explicit reliability requirements from the virtual network operator (VNO).

The inventive approach is advantageous as it provides, in accordance with embodiments, a general platform which may be used to provide virtual network embedding (VNE) with explicit reliability requirements for both site protection and link protection at the same time. This solution enables to run high reliability requirement services, like telecommunication services, on low cost and, in general, also low reliability commodity hardware. The inventive approach allows for a solution which may handle simultaneously site failures and link failures.

Embodiments of the invention will be described in further detail with reference to the accompanying drawings, in which:

Fig. 1          shows an exemplary representation of how
                a virtual network operator provides a de-

Fig. 2     illustrates a conventional creation of one-to-one backup sites on the basis of a simplified physical network;

Fig. 3     shows a simplified example for obtaining full protection for a VNE request including only two nodes in accordance with known approaches, wherein Fig. 3(a) shows a simplified VNE request, Fig. 3(b) shows a full protection when applying a first known approach, and Fig. 3(c) shows full protection when applying a second known approach;

Fig. 4     shows a simplified example for obtaining a one-to-one path protection for a VNE request including only two nodes in accordance with known approaches, wherein Fig. 4(a) shows a simplified VNE request corresponding to the one of Fig. 3(a), and Fig. 4(b) shows a conventional approach for obtaining a one-to-one path protection;

Fig. 5     shows a schematic representation of an exemplary system implementing embodiments of the present invention;

Fig. 6     shows an example for embedding a VNE request including two virtual nodes;

Fig. 7     shows a message sequence chart for a VNE setup;

Fig. 8     shows an embodiment of a message sequence chart for a VNE release;

Fig. 9     shows a high-level flow chart of the VNE algorithm;

Fig. 10     shows an embodiment for implementing the VNE request processing of Fig. 9, wherein Fig. 10(a) shows an example of a VNE request, and wherein Fig. 10(b) explains the respective steps carried out during the first step 300 in Fig. 9;

Fig. 11     shows a flow diagram of the primary and backup sites pairing process in accordance with an embodiment of the present invention;

Fig. 12     explains the filtering of sites according to an access router link reliability;

Fig. 13     depicts a flow chart of the respective steps to map a VNO link to a path in the PN;

Fig. 14(a)     shows an exemplary site cluster obtained from the Primary and Backup Sites Paring (PBSP) module;

Fig. 14(b)     shows an example for determining a primary path between the site shown in Fig. 14(a) and a site cluster for a second VNO node;

Fig. 15     shows an example of a primary path not having a sufficient reliability; and

Fig. 16     shows a primary path and a backup path between two sites.

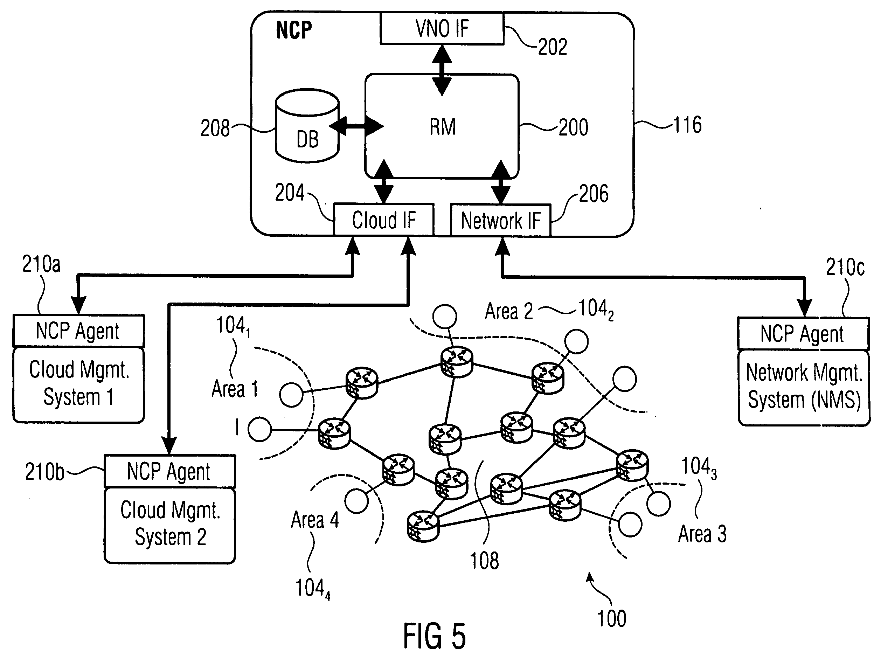

Fig. 5 shows a schematic representation of an exemplary system implementing embodiments of the present invention. In Fig. 5, the physical network 100 is shown in a similar way as in Fig. 1, and includes a plurality of node clouds $104_1$ to $104_4$ including one or more nodes. The respective node clouds $104_1$ to $104_4$ are connected via the core transport network 108 which includes the necessary network entities (routers, switches and the like) and interfaces for connecting to the respective node clouds $104_1$ to $104_4$ and for providing respective connections within the core transport network 108. Fig. 5 further shows the network configuration platform (NCP) 116 also depicted in Fig. 1. The NCP 116 includes a resource management (RM) module 200, the functionality of which will be described in detail below. The NCP 116 comprises a VNO interface 202 for providing a connection to the V-net operator 112 (see Fig. 1), a cloud interface 204 and a network interface 206. Also, the NCP 116 includes a storage device 208 like a database. The RM module 200 is connected to the VNO interface 202, the cloud interface 204, the network interface 206 and the database 208, as is indicated by the respective double headed arrows for allowing a bidirectional communication between the RM module 200 and the just mentioned interfaces/database. The system, in addition, comprises a plurality of NCP agents 210a, 210b and 210c. The NCP agents 210a and 210b are agents including a cloud management system CMS, the NCP agent 210a and 210b being associated with respective node clouds of the network 100. The NCP agents 210a and 210b are connected to the NCP 116 via the cloud interface 204. In addition, the system comprises the NCP agent 210c that is associated with the network management system (NMS), i.e., it is associated with the core transport network 108. NCP agent 210c is connected to the NCP 116 via the network interface 206.

In accordance with embodiments, the network configuration platform (NCP) 116 is a logically centralized platform that executes a resource management role for the computing resources of the cloud sites $104_1$ to $104_4$ and the transport networks 108. The virtual network operators (VNOs) are operators providing service via a virtual network embedding (VNE) methodology on the physical network (PN) 100. The VNOs are not depicted in Fig. 5 but may be seen in Fig. 1 at 112. The cloud management system (CMS) that is, for example, implemented by the NCP agents 210a and 210b is responsible for managing and controlling the operations in a cloud, like the node clouds $104_1$ to $104_4$. For instance, the CMS is responsible for adding or removing virtual services by reserving, setting up and tearing down the necessary resources, for example virtual machines and the underlying hardware. The CMS is also capable to obtain the resource usage situation of its managed cloud. The network management system (NMS) that is implemented in the NCP agent 210c is the transport network managing controlling entity. In accordance with examples, the NMS may be an open flow controller, a software defined network (SDN) controller or the like. The NMS is responsible for setting up, modifying or terminating communication paths that pass through the switching/routing devices in the network 108. The NMS is also capable to obtain the network usage information of its managed transport network 108.

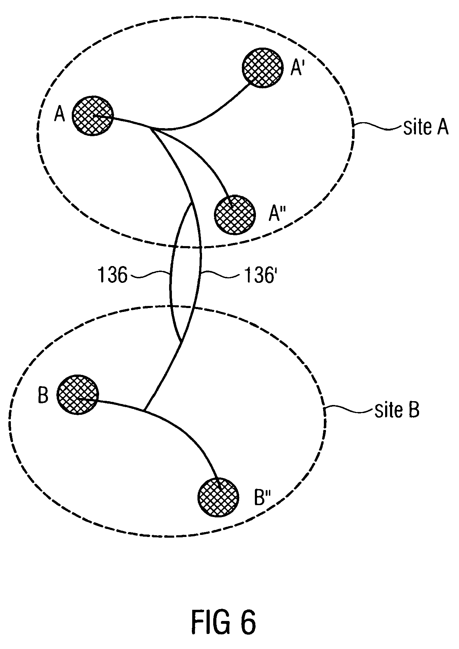

Embodiments of the invention are implemented in the RM module 200 and provide both site and path protection at the same time, as is schematically depicted in Fig. 6. Fig. 6 shows an example for embedding a VNE request including the two nodes, for example the VNE request as described above with regard to Fig. 3A or with regard to Fig. 4A. For embedding the nodes A and B connected by the link 134 (as defined in the VNE request 132), in accordance with the inventive approach site and path protection are implemented at the same time, namely at the time of mapping. For example, the concurrent site and path protection yields for site A the two backup sites A' and A", and for site B the backup site B". Also, at the same time, the primary link 136 and the backup link 136' between the two sites A and B is embedded. In accordance with embodiments, the backup solution is planned based on explicit VNO required reliability requirement and a joint optimization is applied among all paths to reduce overhead bandwidth for the failure recovery purpose. It is not necessary to repeat bandwidth reservation on overlapped links between migration, primary and backup paths.

Embodiments of the invention provide the RM module 200 used by the NCP 116 to manage the cloud and network resources and to embed VNE requests from the VNOs. In accordance with embodiments, the RM module 200 and the RM interfaces 202, 204 and 206 are provided, wherein the RM module 200 implements a method for making a VNE decision with reliability provisioning. The RM module 200 provides a VNE request processing and mapping to calculate the required computing and network resources in the PN 100 to fulfill the VNE request with the reliability provisioning. Further, the RM module 200 performs a resource placement to find appropriate sites to map the VNO requested nodes, which satisfy the service requirements specified by the VNOs. In addition, the RM module 200 provides for a communication path setup to find the paths in the PN 100 to interconnect different sites to realize the VNO requested service network topology.

As is shown in Fig. 5, the NCP 116 includes an interface with a database (DB) 208. The NCP DB 208 is used to store the PN information, for example cloud site and transport network related information, VNE requests from VNOs and embedded VN information, for example consumed computing and networking resources, VN setup time, VN termination time and the like. This interface is also used to load VNE requests from the NCP DB 208 and PN information to calculate a VNE solution, and to update the VNE embedding results and VN status recorded in the DB 208 after a VN is embedded in the PN 100. The interface 202 to the VNO is used to communicate with the VNOs to inform them about the VNS results and the VN related status. Also, the VNE requests are received via this interface. The interface 204 is used to send resource embedding requests and to receive the responses from the CMSs implemented at the NCP agents 210a and 210b. The interface 206 is also used to send network path embedding requests and to receive the responses from the NMSs implemented in the NCP agent 210c.

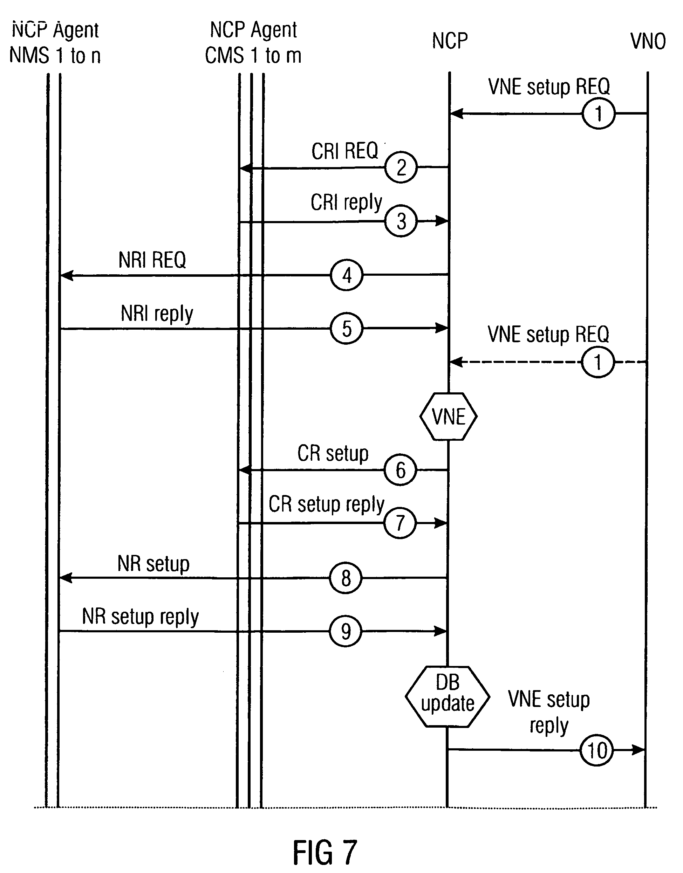

Fig. 7 shows a message sequence chart for a VNE setup. Fig. 7 shows the respective messages passing among the different system components described above with regard to Fig. 5. In Fig. 7, m and n are positive natural numbers. In accordance with embodiments, at step 1, a VNO sends a VNE setup request to the NCP 116. The VNE setup request may contain the number of requested VNO nodes and the VN topology. For each VNO node, it may contain a geographical constraint, a node capacity and a node reliability. The geographical constraint refers to the region that the VNO would like to deploy this service. In case there is no geographical constraint, the VNO node may be mapped to any site within the PN 100. For each VNO link, the request may contain a link bandwidth as well as delay and link reliability requirements. This message may also contain the life time of the VN, for example, a VN start time and a VN end time. In case no VN end time is specified, a VNE release request is required to be sent from the VNO to the NCP 116 to release the embedded VN.

At step 2, the NCP 116 sends a cloud resource information (CRI) request to all CMSs via the cloud interface 204. The CRI REQ message depicted in Fig. 7 requests cloud site information, for example the available site capacity, like the number of virtual machines, CPU, RAM, storage and the like, site reliability, and the reliability of the link to the access router providing the connection to the core transport network 108. At step 3, the CMSs 210a, 210b sent a CRI reply message to the NCP 116 which contains the requested CRI.

At step 4, the NCP 116 sends a network resource information (NRI) request to all NMSs via the network interface 206. The NRI REQ message may request transport network (TN) information, like the TN topology, reliability and bandwidth on each link between the switches of the TN 108. At step 5, the NMSs 210c send a NRI setup reply message to the NCP 116 which contains the requested NRI.

It is noted that steps 2 and 4 as well as steps 3 and 5 may occur at substantially the same time. Further, it is noted that steps 2 to 5 may be triggered for execution upon receipt of a VNE request from a VNO. In accordance with other embodiments, the request of the information from the CMSs and from the NMSs and the receipt of the requested information may be carried out periodically or may be defined by the NCP 116 so that step 1 may occur before step 2 or after step 5, as is indicated in Fig. 7 by the dashed arrow also labeled "1".

On the basis of the information received from the CMSs and the NMSs and on the basis of the VNE setup request, the RM module 200 of the NCP 116 executes the VNE algorithm or method that will be described in further detail later. The VNA algorithm generates a cloud resource (CR) setup message and a network resource (NR) setup message, on the basis of the above mentioned input parameters. At step 6, after completing the VNE algorithm in the NCP 116, the NCP 116 sends out the CR setup message to the CMSs 210a, 210c of the selected cloud sites. This message may contain the required capacity, for example the number of required virtual machines (VMs), CPU, RAM, storage and the like, and the bandwidths that should be reserved for these VMs. Once the VMs have been set up at the respective cloud sites, the CMSs 210a, 210b send a CR reply message to the NCP 116 which may inform the NCP about the setup results. In accordance with examples a success or a failure may be indicated. In case of a success, the message may also send the VM addresses, for example the associated IP addresses to the NCP 116 for network setup purposes.

At step 8, the NCP 116 sends the NR setup message to the selected NMSs 210c. This message may contain the addresses of the VMs at the different cloud sites that are needed to be interconnected and the selected switches to establish the paths between the two different cloud sites. After the NMs 210c has set up the paths it sends back the NR reply message to the NCP 116 at step 9. The message may indicate the path setup results, for example success or failure. In accordance with embodiments, the database 208 of the NCP 116 may be updated according to the setup carried out, and at step 10, after receiving the replies from the CMSs and NMSs, the NCP 116 sends a VNE reply to the VNO which may indicate the embedding result, for example it may indicate a success or a failure.

In case of a successful embedding of the virtual network (VN), the VN will remain for its predefined lifetime as indicated for example in the request as its VN start time and its VN end time. In case no VN start time is specified, the embedding of the VN may be carried out once the request has been received from the VNO. Otherwise, in case a VN start time has been indicated, the embedding of the VN will be scheduled in accordance with the VN start time. In case no VN end time is determined, the VN may be released at any time once a VNE release request is received from the VNO at the NCP 116.

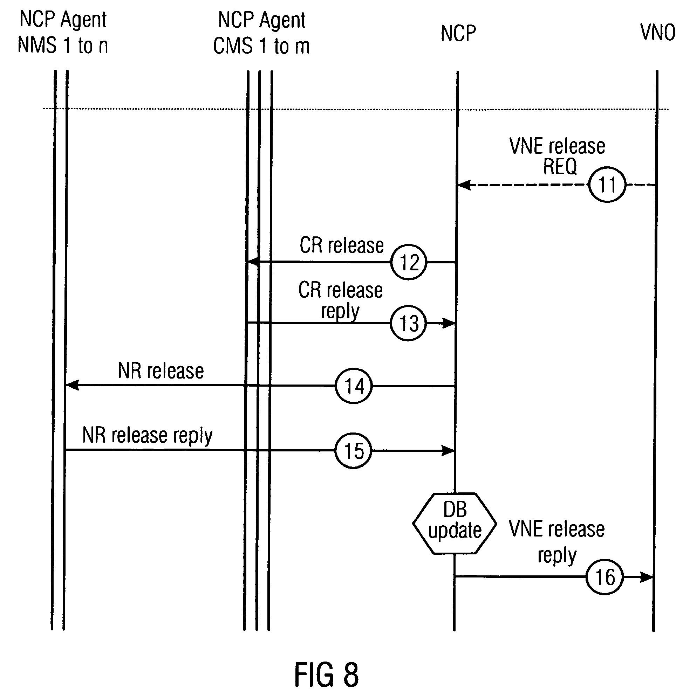

Fig. 8 describes an embodiment of a message sequence chart for a VNE release. Assuming a situation where the VN has been embedded at the end of Fig. 7, for releasing the VN, the VNO 112 sends at step 11 a VNE release request to the NCP 116 to delete the embedded VN. In case a VN end time is specified in the original VNE setup request, this VNE release request is already included in the original setup request and will be activated once the VN end time is reached. In this case, step 11 is not carried out as the release request is already at the NCP 116. Responsive to the VNE release request, the NCP 116, at step 12, sends out a CR release message to the corresponding CMSs 210a, 210b to release the cloud site resources.

Once the CMSs released the reversed resources for the VN, they send back a CR release reply to the NCP 116 at step 13. At step 14, the NCP sends a NR release message to the corresponding NMSs 210c to release the network resources. Once the NMSs 210c released the reserved resources for the VN, at step 15, they send back a NR release reply to the NCP 116. Following this, the database 208 is updated accordingly.

It is noted that steps 12 and 14 as well as steps 13 and 15 may happen at the same time or substantially the same time, i.e., the NCP 116 may send out the CR and NR release messages at the same time.

Once the NCP 116 received the replies from the CMSs 210a, 210b and the NMSs 210c, it deletes this VN related information from its database 208 and also updates the PN information after releasing the cloud site and the network resources and then sends a VNE release reply to the VNO at step 16.

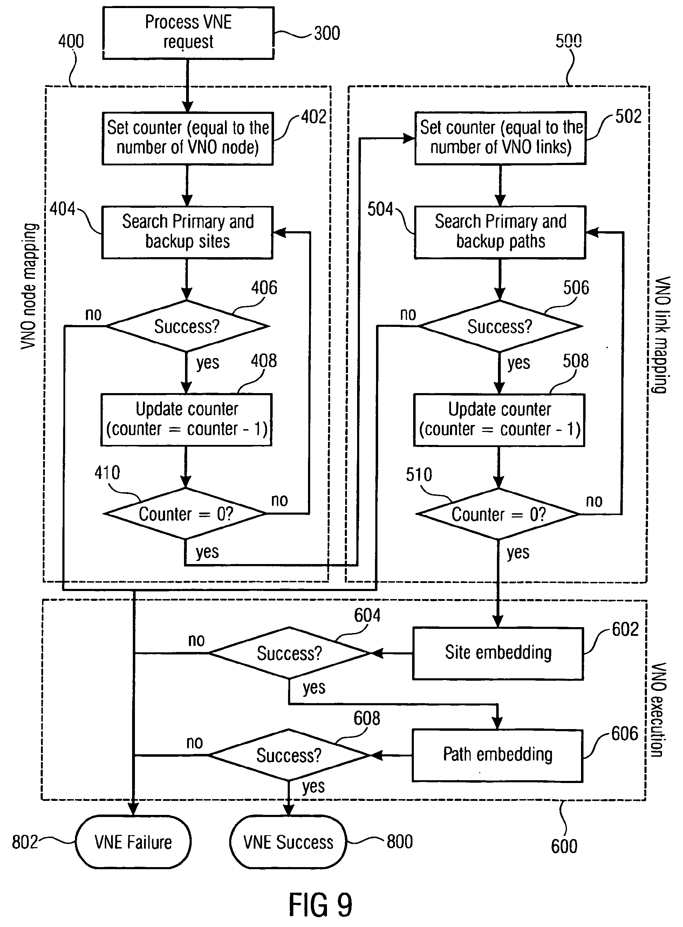

In the following, an embodiment for implementing the VNE algorithm in accordance with the inventive approach will be described. Fig. 9 shows a high-level flow chart of the VNE algorithm which, at a first step 300, processes a received VNE request, for example received from the VNO via the message VNO setup request described above. After processing the VNE request at step 300, the VNE algorithm includes three additional processes, the VNO node mapping process 400 followed by the VNO link mapping process 500 which, in turn, is followed by the VNE execution process 600. The VNO node mapping component is used to find a cloud site or a number of sites to be mapped to the requested VNO nodes. The VNO link mapping is used to search paths between different sites. The mapping results from the VNO node mapping process 400 and from the VNO the link mapping process 500 are sent during VNO execution process 600 to the respective CMSs and NMSs to place the resources and to embed the VN in the PN.

Following the processing of the VNE request at step 300, the process proceeds to the VNO node mapping process 400. At step 402 a counter is set, for example to a value equal to the number of VNO nodes in the request. At step 404, for a current VNO node, i.e., a node in the sequence that is currently evaluated, a search for primary and backup sites in the PN is carried out at step 404. At step 406 it is determined whether the search for primary and backup sites was successful or not. If the search was successful, at step 406, the update counter will be decremented, and at step 410 it will be determined whether the counter reached zero or not. If the counter did not reach zero, it will be determined that there are still VNO nodes in the request to be processed with regard to primary and backup sites so that the VNO node mapping process 400 returns to step 404 where, for the next node in the sequence, primary and backup sites are searched. Once primary and backup sites have been found for all VNO nodes, the method proceeds to the VNO link mapping process 500. At step 502 a counter is set, for example equal to a number of VNO links in the request. For the current VNO link a search for primary and backup paths is carried out at step 504, and at step 506 it is determined whether the search was successful. If the search was successful, the counter will be updated at step 508 by decrementing the counter. At step 510 it is determined whether the counter reached zero. If the counter did not reach zero, this means that there are still VNO links remaining in the request for which primary and backup paths need to be searched so that the VNO link mapping process 500 returns to step 504 and is repeated until all VNO links have been processed. Once primary and backup paths have been found for all VNO links, the method proceeds to the VNE execution process 600. The VNE execution causes the NCP 116 to issue the respective CR setup and NR setup messages. More specifically, at step 602, a site embedding is carried out by sending out the CR setup message described above and receiving the CR setup reply. At step 604, on the basis of information received in the CR setup reply message, it is determined whether the site embedding was successful or not. If the site embedding was successful, the method will proceed to step 606 where path embedding is carried out, for example by generating, on the basis of the received information, the NR setup message and sending it out to the respective NMSs as described above. Also, the NR setup reply is received at block 606 so that at block 608 it may be determined if the path embedding was successful or not. If the path embedding was successful, the VNE success will be indicated at step 800, for example by outputting a VNE setup reply to the VNO.

In case there is a VNO node in the VNE request for which no primary and backup site could be found, it is indicated at step 406 that the search for primary and backup sites was not successful, and the method then proceeds to 802 where a VNE failure is output, for example, by outputting a corresponding reply message to the VNO. Also, in case for one or more of the VNO links in the VNE request, no primary and backup paths could be determined, it is indicated at step 506 that the search was not successful and the method then also terminates and outputs the VNE failure 802. In case the site embedding or the path embedding during the VNE execution process 600 was not successful, the method the VNE failure 802.

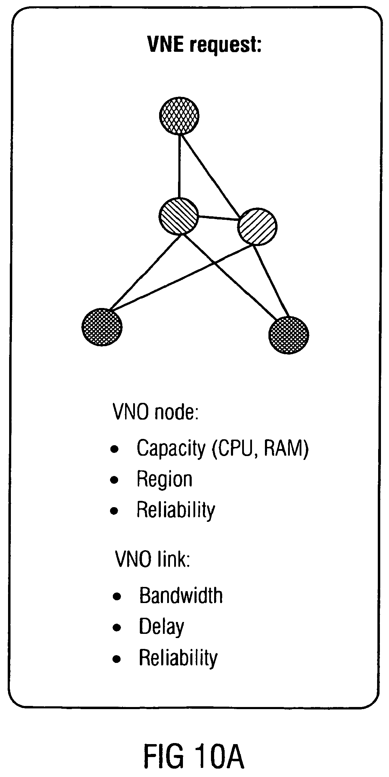

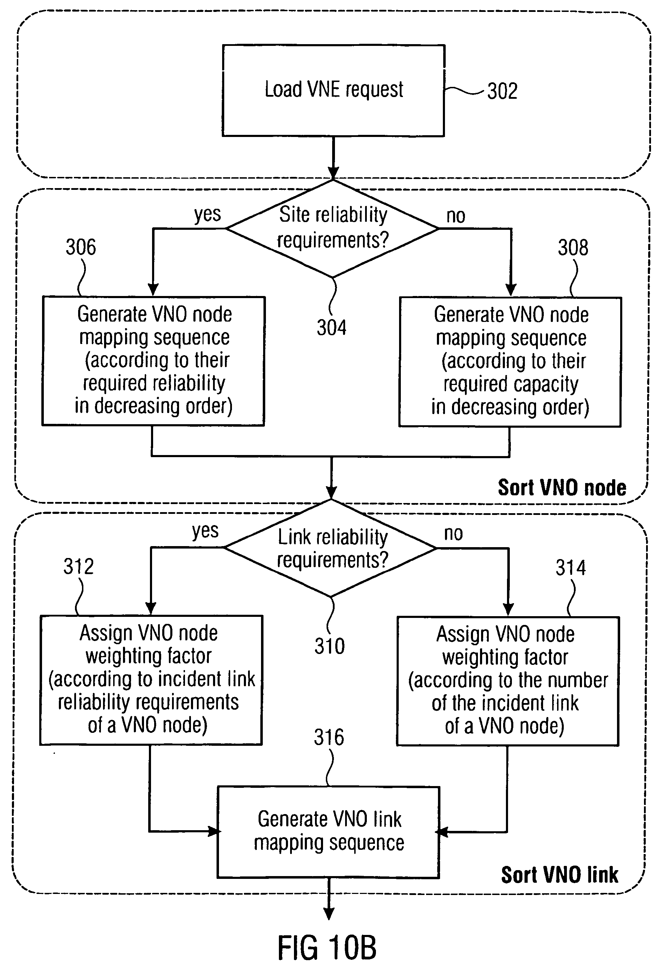

In the following, an embodiment for implementing the VNE request processing 300 (see Fig. 9) will be described with regard to Fig. 10. Fig. 10(a) shows an example of a VNE request and Fig. 10(b) explains the respective steps carried out during the process 300 in Fig. 9. The VNE request shown in Fig. 10(a) includes information about the VNO nodes and the VNO links. For the respective nodes, for example, the desired capacity, like CPU, RAM and the like, the desired region and the desired reliability may be indicated. For the respective VNO links, the desired bandwidths, the desired delay and the desired reliability may be indicated in the VNE request. The VNE request as shown in Fig. 10(a) is fed to the NCP 116 in the VNO setup request that is received at the NCP 116 at the VNO interface 202. Via the VNO interface 202 the request is forwarded to the RM module 200 where the method as defined with regard to Fig. 9 is carried out.

Fig. 10(b) shows details of the respective steps carried out during VNE request processing 300 in Fig. 9. The main purpose of this process is to sort the embedding sequence of VNO nodes and VNO links. In accordance with embodiments, the processing of the VNE request comprises a first step 302 in which the VNE request is loaded into the RM module 200. Loading may be either via the VNO interface 202 upon receiving the request or, alternatively, the request may be stored in the database 208 and transferred from the database to the RM module 202, for example at a predefined time at which the VNO should be implemented. In a next part of the method, the VNO nodes indicated in the VNE request are sorted, more specifically, the embedding sequence for the VNO nodes is sorted. At step 304 it is determined if a VNE request includes VNO node reliability requirements. If site reliability requirements are included in the VNE request, the method will proceed to step 306 where a VNO node mapping sequence is generated by sorting the VNO nodes according to the required reliability in decreasing order. For VNO nodes having the same reliability, the sorting is according to the required capacities. For VNO nodes having the same capacity, the sorting is according to the number of incident links attached to the VNO node. In case the VNE request comes without VNO node reliability requirements, the method proceeds to step 308 where the VNO node mapping sequence is generated by sorting the VNO nodes to their required capacities. In case of VNO nodes having the same capacity, sorting is according to the number of incident links to the VNO nodes. The steps for sorting the VNO nodes are repeated until all the VNO nodes are listed in the sorted VNO node embedding sequence list.

Following the sorting of the VNO nodes, the method proceeds with sorting the VNO links in the VNE request. At step 310 it is determined whether the VNE request comes with link reliability requirements. If the request includes link reliability requirements, the method will proceed to step 312 where each VNO node is assigned a weighting factor according to the maximum required incident link reliability of the VNO node. For instance, for a VNO node i which has two incident links with a reliability requirement of $r_1$ and $r_2$, the weighting factor for this node is $w_i = \max(r_1, r_2)$. In case the VNE request does not include link reliability requirements, the method proceeds to step 314 where the VNO nodes are assigned respective weighting factors, wherein the number of incident links of a VNO node is used as the weighting factor.

At step 316 a VNO link mapping sequence is generated by sorting the VNO nodes according to their weighting factor in decreasing order and the incident links of a VNO node with higher weighting factor will be embedded first. If two VNO nodes have the same weighting factor, the VNO node requiring a higher bandwidth will be embedded first. For the incident links attached to the same VNO node, the embedding sequence is decided by the required bandwidth in decreasing order. If two links require the same bandwidth, one link will be randomly picked to embed and then the next link is selected. These steps will be repeated until all VNO links are listed in the sorted VNO link embedding sequence list that is output to the VNO node mapping process 400 shown in Fig. 9.

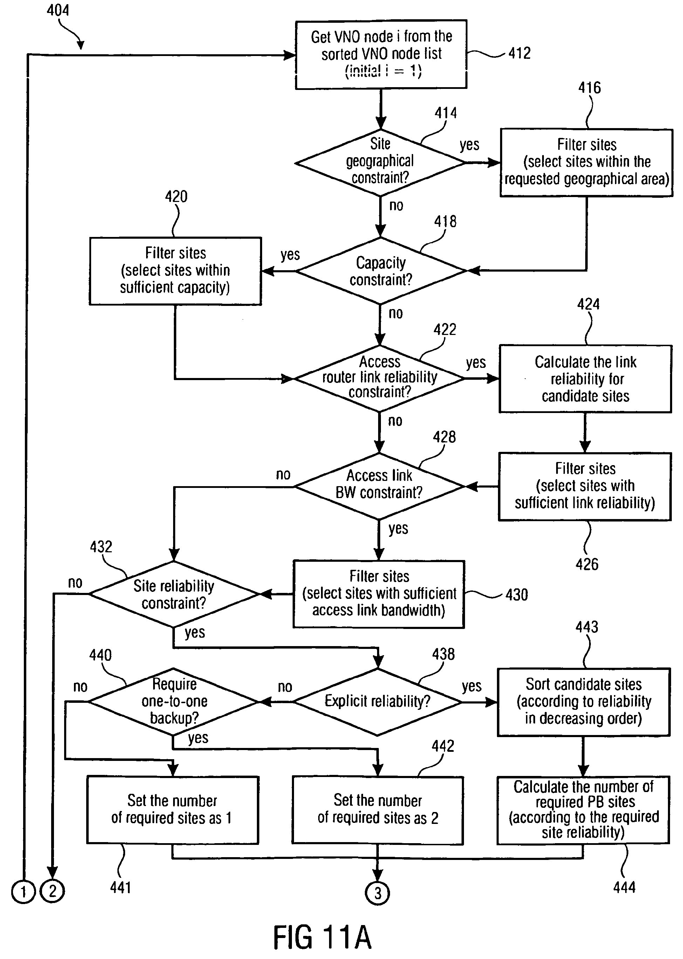

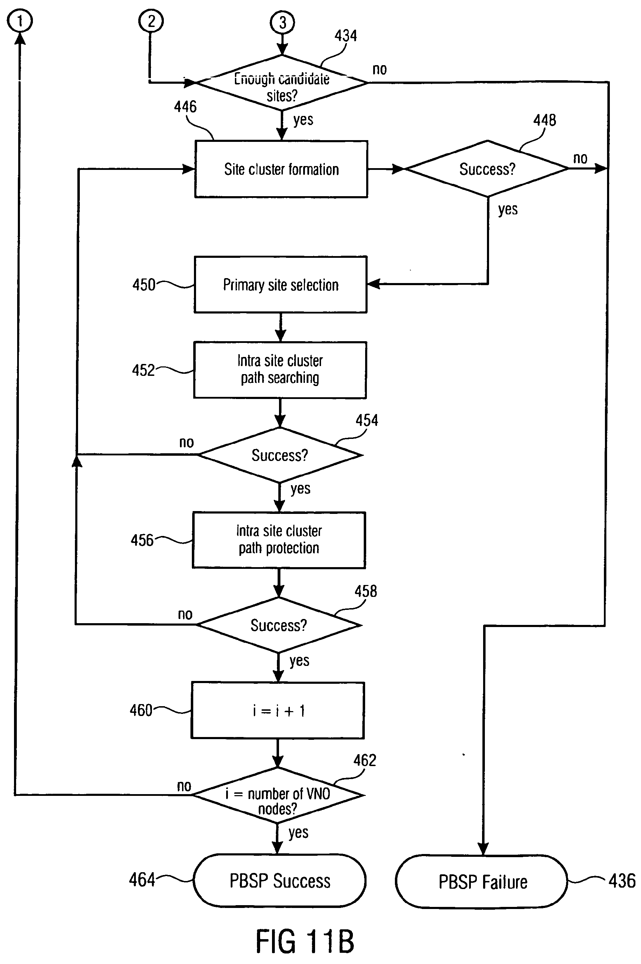

Fig. 11 shows a flow diagram of the primary and backup sites pairing process 404 in accordance with an embodiment of the present invention.

To map one VNO node to a site or a site cluster in the physical network (PN) 100, the steps described in detail with regard to Fig. 11 are carried out in accordance with an embodiment.

At step 412, a VNO node is loaded from the VNO node embedding sequence list which has been generated by the process described in detail with regard to Fig. 10. More specifically, a VNO node i is obtained, wherein i = 1 upon initially starting the process of Fig. 11. The method then proceeds to step 414 for determining whether the VNE request includes site geographical constraints. If such constraints are in the request, the method will proceed to step 416 where the sites are filtered according to the geographical constraints so that sites are selected which are within the requested geographical area indicated in the request. If it is determined at step 414 that no site geographical constraints are in the request, the method will directly proceed to step 418. At step 418 it is determined whether the request includes any capacity constraints. If it is determined at step 418 that the request includes capacity constraints, the method will proceed to step 420 where the sites are filtered according to the required site capacity so that only sites are selected which have a sufficient capacity. If it is determined at step 418 that no capacity constraints are included in the request, the method will proceed directly from step 418 to step 422. At step 422 it is determined whether the request includes access router link reliability constraints. If it is determined at step 422 that the request includes access router link reliability constraints, the method will proceed to step 424 where the link reliability for candidate sites is calculated. Following this, the sites are filtered at step 426 such that only sites having a sufficient link reliability are selected.

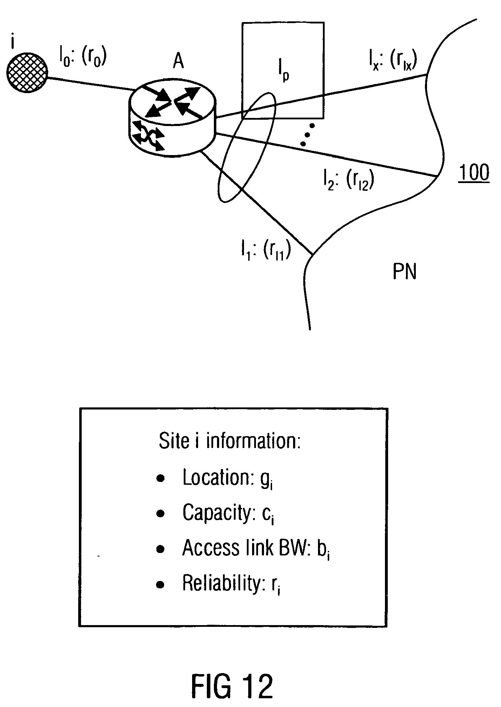

The filtering of the sites according to the access router link reliability is illustrated in Fig. 12 showing a site i connecting to an access router A via a link $l_0$ so that all the traffic to site i needs to go through this link. In accordance with embodiments, to test if the site i may be used to map the VNO node, the following is done. If the reliability of the link $l_0$ between the site i and the access router A, which is also called "access link", is smaller than all the required reliability for the VNO links that connect to the VNO node, site i will not be considered a candidate site. Moreover, traffic from the site i to the rest of the physical network PN relies on the links $l_1$ to $l_x$ connecting the router A to the physical network 100. Hence, the combined reliability $r_p$ of links $l_1$ to $l_x$ should be higher than all the required reliability for the VNO links that connect to VNO node. The combined reliability $r_p$ is defined as follows:

$$r_p = 1 - \prod_{i=1}^{x} 1 - r_i$$

$$r_p \geq r_v$$

with $r_i$ = reliability of link $l_i$.

Following the selection of sites with a sufficient link reliability at step 426, the method proceeds to step 428 where it is determined if the request contains link bandwidth constraints. In case the request does not include any access router link reliability constraints, the method proceeds directly from step 422 to step 428. If the request includes access link bandwidth constraints, the method will proceed to step 430, where the sites are filtered according to the access link bandwidth so that only sites having a sufficient access link bandwidth are determined. Only in case the access link of a site provides the requested bandwidth for a VNO node, this site will be considered a candidate site. If the access link of a site may not provide the requested bandwidth of a VNO node, this site will not be considered a candidate site. The method then proceeds to step 432 where it is determined to whether the request includes site reliability constraints. In case it does not include such constraints, the method proceeds to step 434 where it is determined whether sufficient candidate sites have been obtained by the above described filtering processes. In case no candidate sites or not enough candidate sites have been determined, the method will terminate with a PBSB failure notification at step 436. In case no access link bandwidth constraints are included in the request, the method will proceed directly from step 426 to step 432.

If step 432 indicates that the request includes site reliability constraints, the method will proceed to step 438 where it is determined if an explicit reliability is indicated in the request. If no explicit reliability is indicated at step 438, the method will proceed to step 440 where it is determined if the request indicated a one-to-one backup. If the request does not include such a requirement, the method will proceed to step 441 where the number of required sites is set to one because it is assumed that the request did not include any reliability requirement. In case a one-to-one backup requirement is indicated in the request, the method proceeds to step 442 and the number of required sites for embedding the VNO node is set to two.

On the other hand, when it is determined that the request included an explicit reliability, the method proceeds to step 443 where the sites are sorted according to their site reliabilities in decreasing order, and at step 444, on the basis of the sorted sites output by step 443, the first x sites are selected, wherein the combination of these x sites provides a reliability that is equal to or higher than the requested reliability for the VNO node. In case the first site in the sorted list has already a sufficient high reliability, a backup site is not necessary and the number of sites is set to one. If more than one site is required, the number of required sites will be set to x. An upper limit of the overall number of backup sites for one VNO node may be specified by the NCP 116 or by the VNO 112.

At step 434, it is determined whether enough candidate sites are output by steps 432, 441, 442 or 444 for forming a site cluster to provide site protection for a VNO node, and in case there are not sufficient candidate sites output by the method so far, a PBSB failure 436 is output. On the other hand, if it is determined that enough candidate sites for providing site protection for the VNO node i the method will proceed to step 446 where all selected sites will form a site cluster to be formed to the VNO node i. At step 448, it is determined if the site cluster formation was successful. If it was not successful, the method will terminate with the PBSB failure 436. If the site cluster formation was successful, the method will proceed from step 448 to step 450 where a primary site selection is carried out.

If there is only one site in the cluster, this site is automatically the primary site for the VNO node i. In case there is more than one site in the cluster, one of the sites is selected as a primary site and the other sites are backup sites. The primary site may be selected according to different policies that may be selected by the VNO. In accordance with examples, a first policy may be to randomly select one of the sites as a primary site. In accordance with another embodiment, in case a site reliability is specified, the site having the highest reliability is selected as primary site, and in case several sites have the same reliability, then the one with the highest capacity may be selected as the primary site. Following the primary site selection at step 450, the method performs at step 452 an intra site cluster path searching. If backup sites are required, the path between the primary and backup sites need to be established for resilience purpose. These paths are also called migration paths. The main purpose of these paths is to provide backup support via service migration or traffic redirection when the primary site is down. In accordance with embodiments, the migration path searching may be considered a standard routing problem and, for instance, xILP may be used to calculate the intra site cluster paths and to minimize the reserved bandwidth. The bandwidth used for the path searching may be the sum of all incident link bandwidths of the VNO node. The distance between the primary and backup sites may be specified by the request. At step 454, it is determined whether the intra site cluster path searching was successful, i.e., if migration paths for the site cluster were found. In case the searching was not successful, the method returns from step 454 to step 446 where the site cluster will be re-established by excluding the current site combination.

In case the searching at step 452 was successful, the method proceeds from step 454 to step 456 for performing intra site cluster path protection. The VNO node, as mentioned above, is mapped to the site cluster and the sites within the cluster are inter-connected by the migration paths. In accordance with embodiments, the migration paths inside the site cluster should fulfill the highest reliability of the VNO links that are attached to this VNO node i. For example, a VNO node a is mapped to a cluster A which contains m sites. The VNO node a connects to VNO node b and VNO node c. Therefore, it has two incident links with reliability requirements $r_{ab}$ and $r_{ac}$. The migration paths in the cluster A should fulfill the reliability max $(r_{ab}, r_{ac})$. The path reliability is calculated for each migration path, and in case it fulfils the requirement, no backup is needed. Otherwise, a backup path needs to be found. The backup path may be determined using an approach that will also be used in the primary and backup paths searching module 504 that will be described later.

At step 458 it is determined whether the intra site cluster path projection was successful. If all the migration paths fulfill the reliability requirement with or without backup paths, the index i will be incremented by one at step 460 and at step 462 it is determined whether VNO nodes remain in the list. If VNO nodes remain in the list, the method will go back to step 412, otherwise the primary and backup sites pairing process ends at 464 with an indication that the PBSB process was successful. In case it is determined at step 458 that not all migration paths fulfill the reliability requirement, the method goes back to step 446 where the site cluster will be re-established by excluding the current site combination.

The above described process will be repeated until all VNO nodes are mapped to the sites or site clusters in the physical network and then the PBSB will finish with a success.

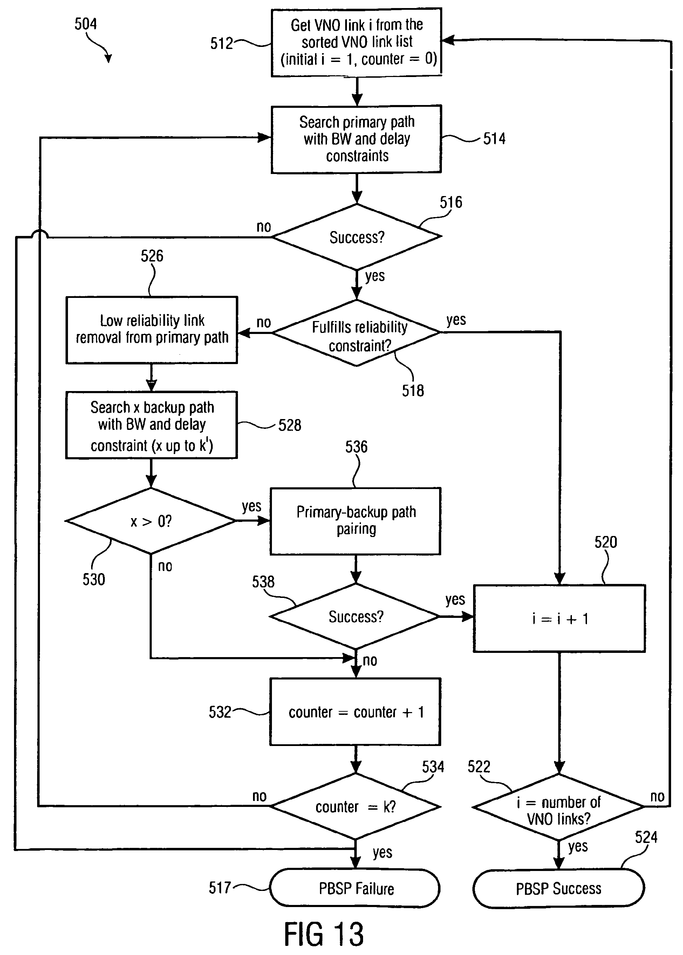

In the following an embodiment of the primary and backup path searching (PBPS) module 504 (see Fig. 9) will be described. In accordance with embodiments, each VNO link may include respective constraints, for example, constraints regarding the link bandwidth, the delay and the reliability. The VNO links are mapped to PN paths according to these constraints. Fig. 13 depicts a flow chart of the respective steps to map a VNO link to a path in the PN, which may be considered a process to find inter-site paths.

The method starts at step 512 where a VNO link is loaded from the VNO link embedding sequence list generated by the VNE request processing 300 described in detail with regard to Fig. 10. At step 512, a VNO link i is selected, wherein initially the value i = 1. Also, a counter is set to 0.

At step 514 a primary path between primary sites of two site clusters is searched. In accordance with embodiments, the path searching may be considered a standard multi-constraint (e.g., bandwidth and delay) based shortest path (CSPF) problem. Embodiments employ the CSPF approach with the constraint being the bandwidth. If the returned shorted path also satisfies the VNO link delay constraint, it will be considered a primary path. At step 516 it is determined whether a primary path has been found. In case no primary path has been found, the process terminates with a PBPS failure 517 and the NCP 116 may report to the VNO a VNE failure.

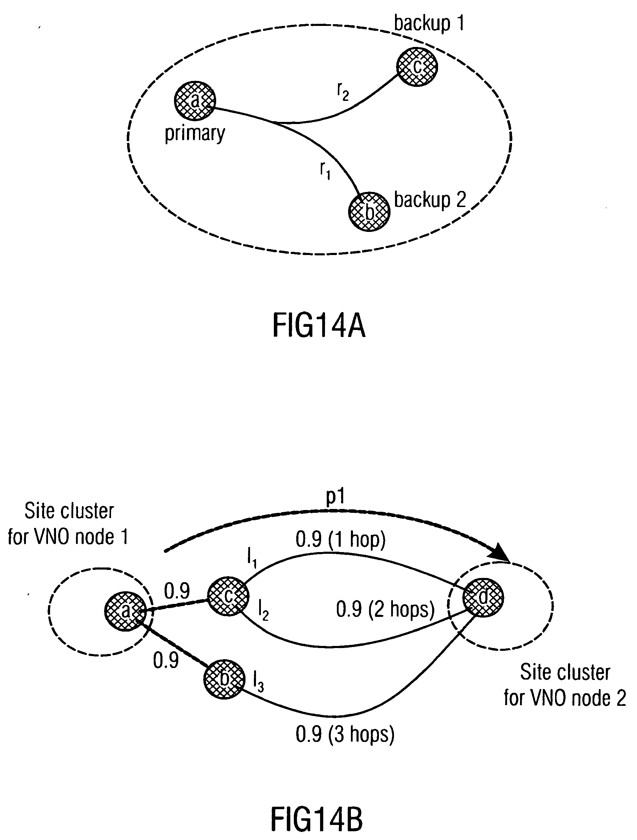

Fig. 14(a) shows an exemplary site cluster obtained from the Primary and Backup Sites Paring (PBSP) module 404 including a primary site a and two backup sites b and c connected by respective migration paths $r_i$ and $r_2$. Fig. 14(b) shows an example for determining a primary path between the primary site shown in Fig. 14(a) and a site cluster for a second VNO node. The search yields three possible links $l_1$, $l_2$ and $l_3$ all providing the same bandwidth of 0.9. The first link $l_1$ includes one hop, the second link $l_2$ includes two hops and the third link $l_3$ includes three hops. Each hop indicates a passing through a router/switch of the transport network 108 adding to the delay. Thus, the CSPF approach using the bandwidth and the delay as the constraint will yield primary path P1 including link $l_1$ as this is the shortest link providing the smallest delay.

If it is determined at step 516 that a primary link has been determined, the method will move to step 518 where it is determined whether the path selected as primary link fulfils a desired reliability criterion. For a path with x intermediate links, the reliability of the overall path is calculated. In the example shown in Fig. 14(b), the paths between site a and site d, includes in addition to the links $l_1$, $l_2$ and $l_3$ the further connection from site a to site b and site c. It is calculated whether the reliability of the connection from site a to site c and from site c via link $l_1$ to site d fulfills the mapped VNO link reliability requirement. If it is determined at step 518 that this requirement is fulfilled, the method will proceed to step 520 where i is incremented by 1, and at step 522 it is determined whether the list provided at step 512 still includes any VNO links. If this is true, the method will return to step 512 for determining for the next VNO link the respective primary and backup paths. Otherwise, i.e., if all VNO links in the list have been processed, the method terminates at 524 with a PBPS success.

In case it is indicated at step 518 that the primary path selected does not fulfill the reliability constraints, the method tries to find a backup path and proceeds to step 526 where a PN graph reduction is carried out for backup path searching. In accordance with this process, all links from the primary path that do not fulfill the reliability requirements are removed, and the method proceeds to step 528. At step 528 a backup path search is carried out on the basis of the reduced PN graph obtained from step 526. In accordance with embodiments, again the CSPF approach may be used with a constraint being the bandwidth for searching the k' shortest paths that satisfy the delay requirements. These paths are considered candidate backup paths. The number of returned paths may be smaller than k' in case there are not enough paths between the primary sites. At step 530, it is determined whether any candidate backup paths have been found, i.e., whether x is greater than 0. If this is not true, the method will proceed to step 532 where the counter is incremented by one and at step 534 it is determined whether the counter reached the value k. In case the value k has been reached, the module exists with the PBPS failure indication at 518. Otherwise, the method returns to step 514 to find the next shortest path to be used as primary paths. In case the process moves back to step 514 due to any path mapping failure from the following steps, the next shortest path is selected by applying the CSPF algorithm and the next shortest path is used as new primary path. Step 514 may be repeated up to k times which means if k paths fail to be the primary path the method will exit with the PBPS failure and the NCP 116 reports to the VNO a VNE failure. The parameter k is an operational parameter which may be specified by the NCP or the VNO.

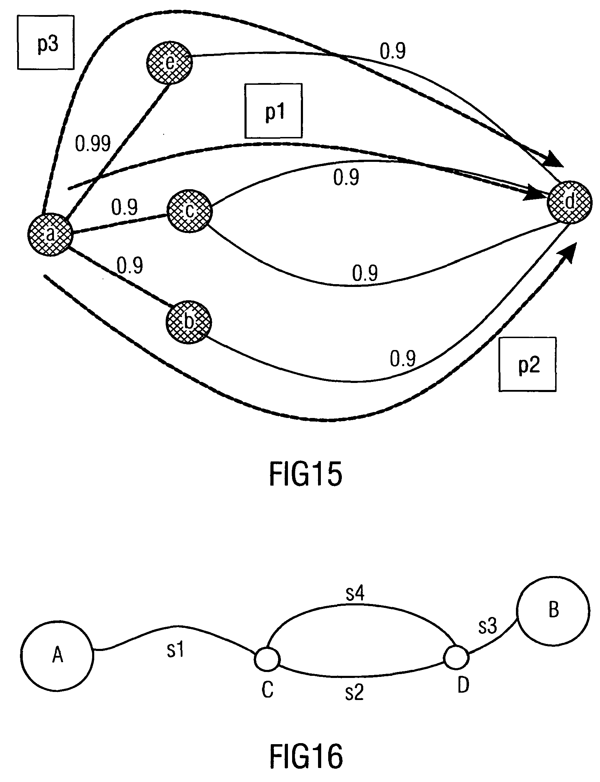

In case it is determined at step 530 that backup paths are available, at step 536 the candidate backup paths are sorted according to their reliability in decreasing order. The first x paths are selected that satisfy the VNO link reliability requirements together with the primary path. All combinations of the x paths with sufficient reliability are determined and one combination having the least bandwidth consumption for link mapping is selected. Fig. 15 shows an example in which between a primary node a of a first site and the primary node d of a second site a primary path p1 has been found which did not have a sufficient reliability. The above process yielded three additional backup paths p2, p3 and p4 and it is assumed that the path p3 has the highest reliability and the path p4 has the lowest reliability so that after sorting, the following order of paths is obtained [p3, p2, p4]. If paths p3 and p1 may provide for a sufficient reliability, then x = 1 which means that only one backup path is needed to provide for a sufficient reliability. All combinations for x = 1 are listed as follows (p1, p3), (p1, p2) and (p1, p4). For the primary and backup paths, it is not necessary to repeat reserving bandwidths for the overlapped links. For example, as it shown in Fig. 16, the primary paths between site A and site B may comprise three path segments or links s1, s2 and s3. The backup path for site A and site B may also comprise three segments, namely segments s1, s4 and s3. To reserve bandwidths for the primary and backup paths, the same bandwidth is reserved for segments s1, s2 and s3 and s4, respectively. If all combinations have a sufficient reliability, the pair with the minimum bandwidth consumption will be selected.

The above approach for backup path search/selection may also be used at steps 452 and 456 for the intra site cluster path search/selection.

At step 538, it is determined whether a combination fulfilling the reliability requirement has been found. If this is not true, the method will proceed to step 532 and back to step 540 to find another primary path as described above. Otherwise, the process goes to step 520 where i is incremented and in case further links exist, the method returns to step 512 and is repeated. It is noted that the path searching involving parameters k and k' are operational parameters which may be defined either by the NCP 116 or the VNO 112.

The process described with regard to Fig. 13 will be repeated until all VNO links are mapped to the paths in the PN and the PBPS is finished with success.

Once the mapping solution is computed for the VNE request, the site embedding and path embedding requests are sent to the CMSs and NMSs for resource reservation and path embedding execution, as has been described above with regard to Fig. 9.

Physical network elements may comprise computers, routers, site management systems and the like. NCP directed resources, for example resources defined by the VNO network requests, may comprise CPU cycles/cores, memory elements, virtual machines, transmission bandwidths, data forwarding priority and the like. The IDs may comprise IP addresses, tunnel IDs and the like.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein

## Claims

1. A method for mapping a network topology request to a physical network (100), the network topology request including a plurality of VNO nodes and a plurality of VNO links, the method comprising:

(a) for each of a plurality of VNO nodes included in the network topology request:

(a.1) determining a site cluster including a plurality of sites in the physical network (100) that meet a VNO node resource requirement associated with the VNO node to be mapped, and

(a.2) selecting one or more migration paths in the physical network (100) that meet a backup link requirement for a link between the sites of the site cluster;

(b) for each of a plurality of VNO links between respective VNO nodes included in the network topology request:

(b.1) determining a plurality of paths in the physical network (100) that meet a VNO link requirement for a path between two site clusters, and

(b.2) selecting from the paths determined in step (b.1) a primary path and at least one backup path for linking two site clusters.

2. The method of claim 1, wherein step (a.1) comprises:

determining, on the basis of a VNO node reliability requirement, a number of required sites in the site cluster to map the VNO node, and selecting one of the sites in the site cluster as primary site and the other sites as backup sites.

3. The method of claim 2, wherein the primary site is selected randomly from one of the sites of the site cluster, or
is the site having the highest reliability, or
is the site having the highest capacity, in case two or more sites have the same reliability.

4. The method of claim 2 or 3, wherein determining the number of required sites in the site cluster comprises:

sorting a plurality of sites in the physical network (100) according to the site reliabilities in decreasing order; and
selecting one or more candidate sites from the plurality of sites, wherein the combination of the one or more candidate sites provides for a reliability equal or higher than a requested VNO node reliability requirement, and wherein all selected candidate sites form the site cluster for mapping the VNO node.

5. The method of one of claims 1 to 4, wherein the network topology request specifies a VNO link reliability requirement for the VNO links connected to the VNO node corresponding to the primary site in the site cluster, and wherein step (a.2) comprises:

determining a path reliability for each migration path; and
in case the path reliability for a migration path does not fulfil the highest VNO link reliability requirement, determining a migration backup path for the migration path.

6. The method of one of claims 1 to 5, wherein step (a) comprises determining a number of candidate sites in the physical network (100) on the basis of which steps (a.1) and (a.2) are performed, and wherein determining the candidate sites comprises filtering the sites in the physical network (100) according to one or more predefined constraints.

7. The method of one of claims 1 to 6, wherein step (b) comprises:

determining whether the primary path fulfils a VNO link reliability requirement;
in case the primary path does not fulfil the VNO link reliability requirement, selecting a backup path such that the backup path together with the primary path satisfies the VNO link reliability requirement;
selecting one or more backup paths each satisfying together with the primary path the VNO link reliability requirement; and
selecting from the combinations of the backup path and the primary path having a sufficient reliability the combination with the least bandwidth consumption.

8. The method of one of claims 1 to 7, wherein the backup link requirement includes a first parameter indicative of a predefined distance between the VNO node and its backup node, and a second parameter indicative of a predefined constraint of the link between the VNO node and its backup node, and wherein the VNO node link requirement includes a first parameter indicative of a distance between the VNO node, and a second parameter indicative of a predefined constraint of the VNO link between the VNO node.

9. The method of one of claims 1 to 8, comprising:

receiving (302) the network topology request; and
generating (306, 308, 316) a VNO node embedding sequence list and a VNO link embedding sequence list, wherein steps (a) and (b) are performed on the basis of the VNO node embedding sequence list and the VNO link embedding sequence list.

10. The method of claim 9, wherein generating the VNO node embedding sequence list comprises:

in case the network topology request includes VNO node reliability requirements, sorting (306) the VNO nodes according to the required reliability in decreasing order, sorting the VNO nodes with the same reliability according to the required capacities, and sorting the VNO nodes with the same capacity according to the number of incident links attached to the VNO nodes; and in case the network topology request does not include VNO node reliability requirements, sorting (308) the VNO nodes according to the required capacities, and sorting the VNO nodes with the same capacity according to the number of incident links attached to the VNO nodes.

11. The method of claim 9 or 10, wherein generating the VNO link embedding sequence list comprises:

in case the network topology request includes link reliability requirements, assigning (312) to each VNO node a weighting factor according to the maximum required incident link reliability of a VNO node; in case the network topology request does not include link reliability requirements, using (314) the number of incident links of a VNO node as the weighting factor; and sorting the VNO nodes according to the weighting factor in decreasing order; and sorting the VNO links such that (i) incident links of a VNO node with a higher weighting factor will be embedded first, (ii) in case two VNO nodes have the same weighting factor, the VNO node requiring a higher bandwidth will be embedded first, and (iii) incident links attached to the same VNO node are embedded in accordance with an embedding sequence decided by the required bandwidth in decreasing order.

12. The method of one of claims 1 to 11, wherein the network topology request specifies a communication network, wherein the communication network comprises a mobile communication network including one or more radio access areas and one or more nodes connected by a core network, the one or more nodes including a packet data network gateway, a serving gateway, a mobile management entity node or a service node.

13. A computer program product including instructions stored on a computer readable medium which, when running on a computer, executes the method of one of claims 1 to 12.

14. A mobile communication system, comprising:

a physical network (100); and a network configuration platform coupled to the physical network (100) and configured to receive a network topology request and to map the network topology request to the physical network (100) in accordance with the method of one of claims 1 to 12.

15. A network configuration platform for a mobile communication system including a physical network (100),
wherein the network configuration platform is configured to be coupled to the physical network (100) and to receive a network topology request; and wherein the network configuration platform is configured to map the network topology request to the physical network (100) in accordance with the method of one of claims 1 to 12.

**Patentansprüche**

1. Ein Verfahren zum Abbilden einer Netztopologieanfrage auf ein physisches Netz (100), wobei die Netztopologieanfrage eine Mehrzahl von VNO-Knoten und eine Mehrzahl von VNO-Verbindungen beinhaltet, wobei das Verfahren folgende Schritte aufweist:

(a) für jeden einer Mehrzahl von VNO-Knoten, die in der Netztopologieanfrage beinhaltet sind:

(a.1) Bestimmen eines Ortsclusters mit einer Mehrzahl von Orten in dem physischen Netz (100), die eine VNO-Knotenressourcenanforderung erfüllen, die dem abzubildenden VNO-Knoten zugeordnet ist, und
(a.2) Auswählen eines oder mehrerer Migrationswege in dem physischen Netz (100), die eine Sicherungsverbindungsanforderung für eine Verbindung zwischen den Orten des Ortsclusters erfüllen;

(b) für jede einer Mehrzahl von VNO-Verbindungen zwischen jeweiligen VNO-Knoten, die in der Netztopologieanfrage beinhaltet sind:

(b.1) Bestimmen einer Mehrzahl von Wegen in dem physischen Netz (100), die eine VNO-Verbindungsanforderung für einen Weg zwischen zwei Ortsclustern erfüllen, und
(b.2) Auswählen eines primären Weges und zumindest eines Sicherungsweges zum Verbinden zweier Ortscluster aus den bei Schritt (b.1) bestimmten Wegen.

2. Das Verfahren gemäß Anspruch 1, bei dem Schritt (a.1) folgende Schritte aufweist:

Bestimmen einer Anzahl erforderlicher Orte in dem Ortscluster zur Abbildung des VON-Knotens auf der Basis einer VNO-Knotenzuverlässigkeitsanforderung, und
Auswählen eines der Orte in dem Ortscluster als primärer Ort und der anderen Orte als Sicherungsorte.

3. Das Verfahren gemäß Anspruch 2, bei dem der primäre Ort:

zufällig aus einem der Orte des Ortsclusters ausgewählt wird, oder
der Ort mit der höchsten Zuverlässigkeit ist, oder der Ort mit der höchsten Kapazität ist, für den Fall, dass zwei oder mehr Orte die gleiche Zuverlässigkeit aufweisen.

4. Das Verfahren gemäß Anspruch 2 oder 3, bei dem das Bestimmen der Anzahl erforderlicher Orte in dem Ortscluster folgende Schritte aufweist:

Sortieren einer Mehrzahl von Orten in dem physischen Netz (100) gemäß den Ortszuverlässigkeiten in absteigender Reihenfolge; und
Auswählen eines oder mehrerer in Frage kommender Orte aus der Mehrzahl von Orten, wobei die Kombination des einen oder der mehreren in Frage kommenden Orte für eine Zuverlässigkeit sorgt, die größer oder gleich einer angefragten VNO-Knotenzuverlässigkeitsanforderung ist, und wobei alle ausgewählten in Frage kommenden Orte den Ortscluster zum Abbilden des VNO-Knotens bilden.

5. Das Verfahren gemäß einem der Ansprüche 1 bis 4, bei dem die Netztopologieanfrage eine VNO-Verbindungszuverlässigkeitsanforderung für die VNO-Verbindungen spezifiziert, die mit dem VNO-Knoten verbunden sind, der dem primären Ort in dem Ortscluster entspricht, und bei dem Schritt (a.2) folgende Schritte aufweist:

Bestimmen einer Wegzuverlässigkeit für jeden Migrationsweg; und
in dem Fall, dass die Wegzuverlässigkeit für einen Migrationsweg nicht die höchste VNO-Verbindungszuverlässigkeitsanforderung erfüllt, Bestimmen eines Migrationssicherungsweges für den Migrationsweg.

6. Das Verfahren gemäß einem der Ansprüche 1 bis 5, bei dem Schritt (a) ein Bestimmen einer Anzahl in Frage kommender Orte in dem physischen Netz (100) auf der Basis dessen aufweist, welche Schritte (a.1) und (a.2) durchgeführt werden, und bei dem das Bestimmen der in Frage kommenden Orte ein Filtern der Orte in dem physischen Netz (100) gemäß einer oder mehreren vordefinierten Einschränkungen aufweist.

7. Das Verfahren gemäß einem der Ansprüche 1 bis 6, bei dem Schritt (b) folgende Schritte aufweist:

Bestimmen, ob der primäre Weg eine VNO-Verbindungszuverlässigkeitsanforderung erfüllt;
in dem Fall, dass der primäre Weg die VNO-Verbindungszuverlässigkeitsanforderung nicht erfüllt, Auswählen eines Sicherungsweges, derart, dass der Sicherungsweg zusammen mit dem primären Weg die VNO-Verbindungszuverlässigkeitsanforderung erfüllt;
Auswählen eines oder mehrerer Sicherungswege, die jeweils zusammen mit dem primären Weg die VNO-Verbindungszuverlässigkeitsanforderung erfüllen; und
Auswählen der Kombination mit dem geringsten Bandbreitenverbrauch aus den Kombinationen des Sicherungsweges und des primären Weges mit einer ausreichenden Zuverlässigkeit.

8. Das Verfahren gemäß einem der Ansprüche 1 bis 7, bei dem die Sicherungsverbindungsanforderung einen ersten Parameter, der eine vordefinierte Entfernung zwischen dem VNO-Knoten und seinem Sicherungsknoten anzeigt, und einen zweiten Parameter beinhaltet, der eine vordefinierte Einschränkung der Verbindung zwischen dem VNO-Knoten und seinem Sicherungsknoten anzeigt, und bei dem die VNO-Knotenverbindungsanforderung einen ersten Parameter, der eine Entfernung zwischen dem VNO-Knoten anzeigt, und einen zweiten Parameter beinhaltet, der eine vordefinierte Einschränkung der VNO-Verbindung zwischen dem VNO-Knoten anzeigt.

9. Das Verfahren gemäß einem der Ansprüche 1 bis 8, das folgende Schritte aufweist:

Empfangen (302) der Netztopologieanfrage; und
Erzeugen (306, 308, 316) einer VNO-Knoten-Einbettungssequenzliste und einer VNO-Verbindungs-Einbettungssequenzliste, wobei die Schritte (a) und (b) auf der Basis der VNO-Knoten-Einbettungssequenzliste und der VNO-Verbindungs-Einbettungssequenzliste durchgeführt werden.

**10.** Das Verfahren gemäß Anspruch 9, bei dem das Erzeugen der VNO-Knoten-Einbettungssequenzliste folgende Schritte aufweist:

in dem Fall, dass die Netztopologieanfrage VNO-Knotenzuverlässigkeitsanforderungen beinhaltet, Sortieren (306) der VNO-Knoten gemäß der erforderlichen Zuverlässigkeit in absteigender Reihenfolge, Sortieren der VNO-Knoten mit der gleichen Zuverlässigkeit gemäß den erforderlichen Kapazitäten und Sortieren der VNO-Knoten mit der gleichen Kapazität gemäß der Anzahl einfallender Verbindungen, die an die VNO-Knoten angeschlossen sind; und
in dem Fall, dass die Netztopologieanfrage keine VNO-Knotenzuverlässigkeitsanforderungen beinhaltet, Sortieren (308) der VNO-Knoten gemäß den erforderlichen Kapazitäten und Sortieren der VNO-Knoten mit der gleichen Kapazität gemäß der Anzahl einfallender Verbindungen, die an die VNO-Knoten angeschlossen sind.

**11.** Das Verfahren gemäß Anspruch 9 oder 10, bei dem das Erzeugen der VNO-Verbindungs-Einbettungssequenzliste folgende Schritte aufweist:

in dem Fall, dass die Netztopologieanfrage Verbindungszuverlässigkeitsanforderungen beinhaltet, Zuweisen (312) eines Gewichtungsfaktors gemäß der maximallen erforderlichen Einfallsverbindungszuverlässigkeit eines VNO-Knotens zu jedem VNO-Knoten;
in dem Fall, dass die Netztopologieanfrage keine Verbindungszuverlässigkeitsanforderungen beinhaltet, Verwenden (314) der Anzahl von einfallenden Verbindungen eines VNO-Knotens als Gewichtungsfaktor; und
Sortieren der VNO-Knoten gemäß dem Gewichtungsfaktor in absteigender Reihenfolge; und
Sortieren der VNO-Verbindungen, derart, dass (i) einfallende Verbindungen eines VNO-Knotens mit einem höheren Gewichtungsfaktor zuerst eingebettet werden, (ii) in dem Fall, dass zwei VNO-Knoten den gleichen Gewichtungsfaktor aufweisen, der VNO-Knoten, der eine höhere Bandbreite erfordert, zuerst eingebettet wird, und (iii) einfallende Verbindungen, die an den gleichen VNO-Knoten angeschlossen sind, gemäß einer Einbettungssequenz eingebettet werden, die durch die erforderliche Bandbreite bestimmt ist, in absteigender Reihenfolge.

**12.** Das Verfahren gemäß einem der Ansprüche 1 bis 11, bei dem die Netztopologieanfrage ein Kommunikationsnetz spezifiziert, wobei das Kommunikationsnetz ein Mobilkommunikationsnetz aufweist, das einen oder mehrere Funkzugriffsbereiche und einen oder mehrere Knoten beinhaltet, die durch ein Kernnetz verbunden sind, wobei der eine oder die mehreren Knoten ein Paketdatennetz-Gateway, ein versorgendes Gateway, einen Mobilverwaltungsentitätsknoten oder einen Dienstknoten beinhalten.

**13.** Ein Computerprogrammprodukt mit Befehlen, gespeichert auf einem computerlesbaren Medium, das, wenn es auf einem Computer läuft, das Verfahren gemäß einem der Ansprüche 1 bis 12 ausführt.

**14.** Ein Mobilkommunikationssystem, das folgende Merkmale aufweist:

ein physisches Netz (100); und
eine Netzkonfigurationsplattform, die mit dem physischen Netz (100) gekoppelt und ausgebildet ist, um eine Netztopologieanfrage zu empfangen und die Netztopologieanfrage gemäß dem Verfahren gemäß einem der Ansprüche 1 bis 12 auf das physische Netz (100) abzubilden.

**15.** Eine Netzkonfigurationsplattform für ein Mobilkommunikatiönssystem mit einem physischen Netz (100),
wobei die Netzkonfigurationsplattform ausgebildet ist, um mit dem physischen Netz (100) gekoppelt zu sein und eine Netztopologieanfrage zu empfangen; und
wobei die Netzkonfigurationsplattform ausgebildet ist, um die Netztopologieanfrage gemäß dem Verfahren gemäß einem der Ansprüche 1 bis 12 auf das physische Netz (100) abzubilden.

**Revendications**

**1.** Procédé de mappage d'une demande de topologie de réseau sur un réseau physique (100), la demande de topologie de réseau comportant une pluralité de noeuds VNO et une pluralité de liaisons VNO, le procédé comprenant le fait de:

(a) pour chacun d'une pluralité de noeuds VNO inclus dans la demande de la topologie de réseau:

(a.1) déterminer un groupe de sites comportant une pluralité de sites dans le réseau physique (100) qui remplissent une condition requise de ressource de noeud VNO associée au noeud VNO à mapper, et
(a.2) sélectionner un ou plusieurs trajets de migration dans le réseau physique (100) qui remplissent une condition requise de liaison de sauvegarde pour une liaison entre les sites du groupe de sites;

(b) pour chacune d'une pluralité de liaisons VNO entre les noeuds VNO respectifs inclus dans la demande de topologie de réseau:

> (b.1) déterminer une pluralité de trajets dans le réseau physique (100) qui remplissent une condition requise de liaison VNO pour un trajet entre deux groupes de sites, et
>
> (b.2) sélectionner parmi les trajets déterminés à l'étape (b.1) un trajet primaire et au moins un trajet de sauvegarde pour relier deux groupes de sites.

2. Procédé selon la revendication 1, dans lequel l'étape (a.1) comprend le fait de:

> déterminer, sur base d'une condition requise de fiabilité de noeud VNO, un nombre de sites requis dans le groupe de sites pour mapper le noeud VNO, et
>
> sélectionner l'un des sites du groupe de sites comme site primaire et les autres sites comme sites de sauvegarde.

3. Procédé selon la revendication 2, dans lequel le site primaire
est choisi au hasard parmi un des sites du groupe de sites, ou
est le site présentant la plus grande fiabilité, ou
est le site présentant la plus grande capacité au cas où deux ou plusieurs sites présentent la même fiabilité.

4. Procédé selon la revendication 2 ou 3, dans lequel le fait de déterminer le nombre de sites requis dans le groupe de sites comprend le fait de:

> trier une pluralité de sites dans le réseau physique (100) selon les fiabilités de site dans l'ordre décroissant; et
>
> sélectionner un ou plusieurs sites candidats parmi la pluralité de sites, où la combinaison des un ou plusieurs sites candidats offre une fiabilité égale ou supérieure à une condition requise de fiabilité de noeud VNO demandée, et où tous les sites candidats sélectionnés forment le groupe de sites pour mapper le noeud VNO.

5. Procédé selon l'une des revendications 1 à 4, dans lequel la demande de topologie de réseau spécifie une condition requise de fiabilité de liaison VNO pour les liaisons VNO connectées au noeud VNO correspondant au site primaire dans le groupe de sites, et dans lequel l'étape (a.2) comprend le fait de:

> déterminer une fiabilité de trajet pour chaque trajet de migration; et
> au cas où la fiabilité de trajet pour un trajet de migration ne remplit pas la condition requise de fiabilité de liaison VNO la plus élevée, déterminer un trajet de sauvegarde de migration pour le trajet de migration.

6. Procédé selon l'une des revendications 1 à 5, dans lequel l'étape (a) comprend le fait de déterminer un nombre de sites candidats dans le réseau physique (100) sur base desquels sont réalisées les étapes (a.1) et (a.2) et dans lequel le fait de déterminer les sites candidats comprend le fait de filtrer les sites dans le réseau physique (100) selon une ou plusieurs contraintes prédéterminées.

7. Procédé selon l'une des revendications 1 à 6, dans lequel l'étape (b) comprend le fait de:

> déterminer si le trajet primaire remplit une condition requise de fiabilité de liaison VNO;
> au cas où le trajet primaire ne remplit pas la condition requise de fiabilité de liaison VNO, sélectionner un trajet de sauvegarde de sorte que le trajet de sauvegarde, ensemble avec le trajet primaire, remplisse la condition requise de fiabilité de liaison VNO;
> sélectionner un ou plusieurs trajets de sauvegarde qui remplissent, chacun, ensemble avec le trajet primaire, la condition requise de fiabilité de liaison VNO; et
> sélectionner parmi les combinaisons du trajet de sauvegarde et du trajet primaire présentant une fiabilité suffisante la combinaison à la moindre consommation de largeur de bande.

8. Procédé selon l'une des revendications 1 à 7, dans lequel la condition requise de liaison de sauvegarde comprend un premier paramètre indiquant une distance prédéfinie entre le noeud VNO et son noeud de sauvegarde, et un deuxième paramètre indiquant une contrainte prédéfinie de la liaison entre le noeud VNO et son noeud de sauvegarde, et dans lequel la condition requise de liaison de noeud VNO comprend un premier paramètre indiquant une distance entre le noeud VNO, et un deuxième paramètre indiquant une contrainte prédéfinie de la liaison VNO entre le noeud VNO.

9. Procédé selon l'une des revendications 1 à 8, comprenant le fait de:

> recevoir (302) la demande de topologie de réseau; et
> générer (306, 308, 316) une liste de séquence intégrant le noeud VNO et une liste de séquence intégrant la liaison VNO, où les étapes (a) et (b) sont effectuées sur base de la liste de séquence intégrant le noeud VNO et la liste des séquence intégrant la liaison VNO.

**10.** Procédé selon la revendication 9, dans lequel le fait de générer la liste de séquence intégrant le noeud VNO comprend le fait de:

au cas où la demande de topologie de réseau comprend des conditions requises de fiabilité de noeud VNO, trier (306) les noeuds VNO selon la fiabilité requise dans l'ordre décroissant, trier les noeuds VNO avec la même fiabilité selon les capacités requises, et trier les noeuds VNO avec la même capacité selon le nombre de liaisons incidentes attachées aux noeuds VNO; et au cas où la demande de topologie de réseau ne comprend pas les conditions requises de fiabilité de noeud VNO, trier (308) les noeuds VNO selon les capacités requises, et trier les noeuds VNO avec la même capacité selon le nombre de liaisons incidentes attachées aux noeuds VNO.

**11.** Procédé selon la revendication 9 ou 10, dans lequel le fait de générer la liste de séquence incorporant la liaison VNO comprend le fait de:

au cas où la demande de topologie de réseau comprend les conditions requises de fiabilité de liaison, attribuer (312) à chaque noeud VNO un facteur de pondération selon la fiabilité de liaison incidente requise maximale d'un noeud VNO; au cas où la demande de topologie de réseau ne comprend pas les conditions requises de fiabilité de liaison, utiliser (314) le nombre de liaisons incidentes d'un noeud VNO comme facteur de pondération; et trier les noeuds VNO selon le facteur de pondération dans l'ordre décroissant; et trier les liaisons VNO de sorte que (i) les liaisons incidentes d'un noeud VNO à facteur de pondération supérieur soient intégrées en premier lieu, (ii) au cas où deux noeuds VNO présentent le même facteur de pondération, le noeud VNO nécessitant une largeur bande supérieure soit intégré en premier lieu et (iii) les liaisons incidentes attachées au même noeud VNO soient intégrées selon une séquence d'intégration décidée par la largeur de bande requise dans l'ordre décroissant.

**12.** Procédé selon l'une des revendications 1 à 11, dans lequel la demande de topologie de réseau définit un réseau de communication, dans lequel le réseau de communication comprend un réseau de communication mobile comportant une ou plusieurs zones d'accès radio et un ou plusieurs noeuds connectés par un réseau central, les un ou plusieurs noeuds comportant une porte de réseau de données de paquets, une porte de desserte, un noeud d'entité de gestion mobile ou un noeud de service.

**13.** Produit de programme d'ordinateur comportant des instructions mémorisées sur un support lisible par ordinateur qui, lorsqu'il est exécuté sur un ordinateur, réalise le procédé selon l'une des revendications 1 à 12.

**14.** Système de communication mobile, comprenant:

un réseau physique (100); et une plate-forme de configuration de réseau couplée au réseau physique (100) et configurée pour recevoir une demande de topologie de réseau et pour mapper la demande de topologie de réseau sur le réseau physique (100) selon le procédé selon l'une des revendications 1 à 12.

**15.** Plate-forme de configuration de réseau pour un système de communication mobile comportant un réseau physique (100),

dans lequel la plate-forme de configuration de réseau est configurée pour être couplée au réseau physique (100) et pour recevoir une demande de topologie de réseau; et dans lequel la plate-forme de configuration de réseau est configurée pour mapper la demande de topologie de réseau physique sur le réseau physique (100) selon le procédé selon l'une des revendications 1 à 12.

FIG 1

**Input:**

VNE request:

- One site node
- Five-nine
- Capacity
- Bandwidth
- Delay
- Region
- etc.

Provisioned reliability: 0.99

0.9      0.9

site A     site B

~100

PN

FIG 2

FIG 3A                              FIG 3B                              FIG 3C

FIG 4A

FIG 4B

FIG 5

EP 2 804 343 B1

FIG 6

| NCP Agent<br>NMS 1 to n | NCP Agent<br>CMS 1 to m | NCP | VNO |
|---|---|---|---|

VNE setup REQ ①

CRI REQ ②

CRI reply ③

NRI REQ ④

NRI reply ⑤

VNE setup REQ ①

VNE

CR setup ⑥

CR setup reply ⑦

NR setup ⑧

NR setup reply ⑨

DB update

VNE setup reply ⑩

FIG 7

| NCP Agent<br>NMS 1 to n | NCP Agent<br>CMS 1 to m | NCP | VNO |
|---|---|---|---|

VNE release
REQ ⑪

CR release ⑫

CR release
reply ⑬

NR release ⑭

NR release reply ⑮

DB
update  VNE release
reply
⑯

FIG 8

FIG 9

**VNE request:**

VNO node:

- Capacity (CPU, RAM)
- Region
- Reliability

VNO link:

- Bandwidth
- Delay
- Reliability

FIG 10A

**FIG 10B**

FIG 11A

FIG 11B

$I_0: (r_0)$    A    $I_p$    $I_x: (r_{Ix})$

$I_2: (r_{I2})$    100

$I_1: (r_{I1})$    PN

Site i information:

- Location: $g_i$
- Capacity: $c_i$
- Access link BW: $b_i$
- Reliability: $r_i$

FIG 12

504

512 — **Get VNO link i from the sorted VNO link list (initial i = 1, counter = 0)**

**Search primary path with BW and delay constraints** — 514

516

**Success?**

no → 

yes ↓

526

**Low reliability link removal from primary path**

no ← **Fulfills reliability constraint?** → yes

518

**Search x backup path with BW and delay constraint (x up to k')** — 528

536

**x > 0?** — yes → **Primary-backup path pairing**

530    no

538

**Success?** — yes → **i = i + 1** — 520

no ↓

532 — **counter = counter + 1**

534

no ← **counter = k?**

yes ↓

522

**i = number of VNO links?** — no

yes ↓  524

517 — ( **PBSP Failure** )    ( **PBSP Success** )

**FIG 13**

FIG14A

FIG14B

FIG15

FIG16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HONGFANG YU et al.** Survivable Virtual Infrastructure Mapping in Federated and Networking System under Single Regional Failure. *Globecom,* 2010
- Cost Efficient Design of Survivable Virtual Infrastructure to Recover from Facility Node Failures. *ICC,* 2011

- **WAI-LEONG YEOW et al.** Designing and Embedding Reliable Virtual Infrastructures. *Computer Communications Review,* 2011, vol. 41-2
- **T. GUO et al.** Shared backup network provision for virtual network embedding. *IEEE ICC,* 2011
- **H. YU et al.** Migration based protection for virtual infrastructure survivability for link failure. *OFC/NFOEC,* 2011